(19) **Europäisches Patentamt**
**European Patent Office**
**Office européen des brevets**

(11) **EP 4 741 779 A1**

(12) **EUROPÄISCHE PATENTANMELDUNG**

(43) Veröffentlichungstag:
**13.05.2026 Patentblatt 2026/20**

(51) Internationale Patentklassifikation (IPC):
*G01G 19/08* (2006.01)

(21) Anmeldenummer: **25208463.7**

(52) Gemeinsame Patentklassifikation (CPC):
**G01G 19/086**

(22) Anmeldetag: **14.10.2025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **31.10.2024 CN 202411545176**

(71) Anmelder: **ZF Friedrichshafen AG**
**88046 Friedrichshafen (DE)**

(72) Erfinder:
• **Wang, Xiandong**
  **88046 Friedrichshafen (DE)**
• **Luo, Zheng**
  **88046 Friedrichshafen (DE)**
• **Fang, Gaoming**
  **88046 Friedrichshafen (DE)**
• **Ormankiran, Mesut**
  **41469 Neuss (DE)**

(74) Vertreter: **ZF Friedrichshafen AG**
**Gewerblicher Rechtsschutz**
**Löwentalerstraße 20**
**88046 Friedrichshafen (DE)**

(54) **VERFAHREN UND VORRICHTUNG ZUR BESTIMMUNG DER MASSE EINES FAHRZEUGS, GERÄT, FAHRZEUG UND MEDIUM**

(57)    Durch die Ausführungsbeispiele der vorliegenden Anmeldung werden ein Verfahren und eine Vorrichtung zur Bestimmung der Masse eines Fahrzeugs, ein Gerät, ein Fahrzeug und ein Medium bereitgestellt. Das Verfahren umfasst: Auswählen mehrerer Echtzeit-Massenschätzungssegmente aus einem vollständigen Echtzeit-Massenschätzungsergebnis; anschließend Ermitteln eines Fahrzeugmassenschätzungsergebnisses für jedes Echtzeit-Massenschätzungssegment; und abschließend Bestimmen eines Massenschätzungsergebnisses für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment. Das Verfahren wird zur Verbesserung der Genauigkeit und Zuverlässigkeit des Massenschätzungsergebnisses in einem einzelnen Fahrvorgang verwendet.

```
┌──────────────────────────────────────────────────────────┐
│ Auswählen mehrerer Echtzeit-Massenschätzungssegmente      │  ⌇ S101
│ aus einem vollständigen Echtzeit-Massenschätzungsergebnis │
└──────────────────────────────────────────────────────────┘
                          │
                          ▼
┌──────────────────────────────────────────────────────────┐
│ Ermitteln eines Fahrzeugmassenschätzungsergebnisses für   │  ⌇ S102
│ jedes Echtzeit-Massenschätzungssegment                    │
└──────────────────────────────────────────────────────────┘
                          │
                          ▼
┌──────────────────────────────────────────────────────────┐
│ Bestimmen eines Massenschätzungsergebnisses für einen     │
│ einzelnen Fahrvorgang basierend auf einem                 │  ⌇ S103
│ Straßenoberfläche-Kraftschlussbeiwert beim Fahren des     │
│ Fahrzeugs und dem Fahrzeugmassenschätzungsergebnis für    │
│ jedes Echtzeit-Massenschätzungssegment                    │
└──────────────────────────────────────────────────────────┘
```

Fig. 1

EP 4 741 779 A1

**Beschreibung**

**Technisches Gebiet**

Die vorliegende Anmeldung bezieht sich auf das Gebiet der Fahrzeugtechniken, insbesondere auf ein Verfahren und eine Vorrichtung zur Bestimmung der Masse eines Fahrzeugs, ein Gerät, ein Fahrzeug sowie ein Medium.

**Stand der Technik**

Die Masse eines Fahrzeugs ist ein wichtiger Parameter in der dynamische Regelung des Fahrzeugs und kann während eines einzelnen Fahrvorgangs des Fahrzeugs im Wesentlichen stabil bleiben. Die genaue Information über die Masse des Fahrzeugs spielt eine entscheidende Rolle bei der Leistungsoptimierung, der Formulierung einer Strategie zur Kraftstoffeinsparung, der Fehlerdiagnose und der Wartung des Fahrzeugs.

Im Stand der Technik handelt es sich bei einem vollständigen Echtzeit-Massenschätzungsergebnis um eine Gruppe von Daten, die aufgrund von Straßenverhältnissen stark schwanken. Es besteht das Problem, dass unterschiedliche Straßenverhältnisse zu signifikanten Abweichungen in den Fahrzeugmassenschätzungsergebnissen führen. In herkömmlichen Lösungen wird das Leergewicht oder eine typische Masse des Fahrzeugs als Massenschätzungsergebnis für einen einzelnen Fahrvorgang ausgewählt.

Allerdings hat das so bestimmte Massenschätzungsergebnis für einen einzelnen Fahrvorgang eine geringe Genauigkeit und eine schlechte Zuverlässigkeit.

**Offenbarung der Erfindung**

Durch die Ausführungsbeispiele der vorliegenden Anmeldung werden ein Verfahren und eine Vorrichtung zur Bestimmung der Masse eines Fahrzeugs, ein Gerät, ein Fahrzeug und ein Medium bereitgestellt, um die Genauigkeit und Zuverlässigkeit des ermittelten Fahrzeugmassenschätzungsergebnisses für einen einzelnen Fahrvorgang zu verbessern.

In einem ersten Aspekt stellen die Ausführungsbeispiele der vorliegenden Anmeldung ein Verfahren zur Bestimmung der Masse eines Fahrzeugs bereit, das umfasst:

Auswählen mehrerer Echtzeit-Massenschätzungssegmente aus einem vollständigen Echtzeit-Massenschätzungsergebnis;
Ermitteln eines Fahrzeugmassenschätzungsergebnisses für jedes Echtzeit-Massenschätzungssegment; und
Bestimmen eines Massenschätzungsergebnisses für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment.

In einer möglichen Ausführungsform umfasst das Bestimmen eines Massenschätzungsergebnisses für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment:

Bestimmen eines Gewichtsfaktors für jedes Echtzeit-Massenschätzungssegment abhängig von dem Straßenoberfläche-Kraftschlussbeiwert beim Fahren des Fahrzeugs für das Echtzeit-Massenschätzungssegment; und
Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment.

In einer möglichen Ausführungsform umfasst das Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment:
gewichtetes Mitteln von Fahrzeugmassenschätzungsergebnissen für mehrere Echtzeit-Massenschätzungssegmente abhängig von dem Gewichtsfaktor für jedes Echtzeit-Massenschätzungssegment, um das Massenschätzungsergebnis für den einzelnen Fahrvorgang zu erhalten.

In einer möglichen Ausführungsform umfasst das Bestimmen eines Gewichtsfaktors für das Echtzeit-Massenschätzungssegment abhängig von dem Straßenoberfläche-Kraftschlussbeiwert beim Fahren des Fahrzeugs für das Echtzeit-Massenschätzungssegment:
Bestimmen eines Gewichtsfaktors, der einem Bereich des Straßenoberfläche-Kraftschlussbeiwerts entspricht, als Gewichtsfaktor für das Echtzeit-Massenschätzungssegment basierend auf einer voreingestellten Zuordnungsbeziehung zwischen Kraftschlussbeiwert-Bereichen und Gewichtsfaktoren sowie basierend auf dem Straßenoberfläche-Kraftschlussbeiwert beim Fahren des Fahrzeugs für das Echtzeit-Massenschätzungssegment.

In einer möglichen Ausführungsform umfasst das Auswählen mehrerer Echtzeit-Massenschätzungssegmente aus einem vollständigen Echtzeit-Massenschätzungsergebnis:

Auswählen mehrerer Echtzeit-Massenschätzungssegmente aus dem vollständigen Echtzeit-Massenschätzungsergebnis abhängig von einem Straßenoberflächentyp während des einzelnen Fahrvorgangs des Fahrzeugs, wobei die Anzahl der ausgewählten Echtzeit-Massenschätzungssegmente je nach dem Straßenoberflächentyp unterschiedlich ist.

In einer möglichen Ausführungsform umfasst das Auswählen mehrerer Echtzeit-Massenschätzungssegmente aus dem vollständigen Echtzeit-Massenschätzungsergebnis abhängig von einem Straßenoberflächentyp während des einzelnen Fahrvorgangs des Fahrzeugs:

Auswählen mehrerer Echtzeit-Massenschätzungssegmente aus dem vollständigen Echtzeit-Massenschätzungsergebnis abhängig von dem Straßenoberflächentyp während des einzelnen Fahrvorgangs des Fahrzeugs und voreingestellten Auswahlregeln für Echtzeit-Massenschätzungssegmente,
wobei die Auswahlregeln für Echtzeit-Massenschätzungssegmente mindestens eine einschränkende Bedingung für Fahrdaten des Fahrzeugs umfassen.

In einer möglichen Ausführungsform umfassen die Auswahlregeln für Echtzeit-Massenschätzungssegmente mindestens eine der folgenden Bedingungen:

dass die Geschwindigkeit des Fahrzeugs größer als eine voreingestellte Geschwindigkeit ist;
dass die Beschleunigung des Fahrzeugs größer als eine voreingestellte Beschleunigung ist;
dass das Antriebsmoment des Fahrzeugs größer als ein voreingestelltes Drehmoment ist; und
dass die Funktionen von Traktionskontrolle (TC), Antiblockiersystem (ABS) und Gierstabilitätskontrolle (YSC) des Fahrzeugs nicht aktiviert sind.

In einer möglichen Ausführungsform umfasst das Verfahren ferner:
Klassifizieren von erfassten Straßenoberflächenbildern unter Verwendung eines vorher trainierten Algorithmus zur Klassifizierung von Straßenoberflächen während eines Fahrvorgangs des Fahrzeugs, um den Straßenoberflächentyp zu erhalten.

In einer möglichen Ausführungsform umfasst der Straßenoberflächentyp einen der folgenden Typen:

schneebedeckte Straßenoberfläche;
unbefestigte Straßenoberfläche;
überflutete Straßenoberfläche;
und trocken asphaltierte Straßenoberfläche.

In einer möglichen Ausführungsform umfasst das Ermitteln eines Fahrzeugmassenschätzungsergebnisses für jedes Echtzeit-Massenschätzungssegment:
Berechnen eines Mittelwerts von Massenschätzungsergebnissen mehrerer Abtastpunkte in jedem Echtzeit-Massenschätzungssegment, um ein Fahrzeugmassenschätzungsergebnis für das Echtzeit-Massenschätzungssegment zu erhalten.

In einer möglichen Ausführungsform umfasst das Verfahren vor dem Berechnen eines Mittelwerts von Massenschätzungsergebnissen mehrerer Abtastpunkte in dem Echtzeit-Massenschätzungssegment ferner:

Entfernen anormaler Daten aus den Massenschätzungsergebnissen der mehreren Abtastpunkte in dem Echtzeit-Massenschätzungssegment, um verarbeitete Massenschätzungsergebnisse der mehreren Abtastpunkte zu erhalten,
und dementsprechend umfasst das Berechnen eines Mittelwerts von Massenschätzungsergebnissen mehrerer Abtastpunkte in dem Echtzeit-Massenschätzungssegment:
Berechnen eines Mittelwerts der verarbeiteten Massenschätzungsergebnisse der mehreren Abtastpunkte.

In einer möglichen Ausführungsform umfasst das Verfahren ferner:

Durchführen einer Echtzeit-Massenschätzung unter Verwendung eines Kalman-Filter-Zustandsschätzmodells während des Fahrvorgangs des Fahrzeugs abhängig von Basisinformationen, Fahrdaten und Umgebungsdaten des Fahrzeugs, um das vollständige Echtzeit-Massenschätzungsergebnis zu erhalten,
wobei das Kalman-Filter-Zustandsschätzmodell aus einer vierdimensionalen Zustand-Raum-Gleichung abgeleitet ist, die auf der Grundlage einer dynamischen Gleichung des Fahrzeugs in der Längsrichtung nach der Optimierung von Parametern eines Vorderradlenkwinkels erstellt ist.

In einer möglichen Ausführungsform umfasst das Verfahren vor dem Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment:

Ermitteln der Beschleunigung des Fahrzeugs innerhalb eines voreingestellten Zeitraums vor jedem Echtzeit-Massenschätzungssegment;
Korrigieren des Gewichtsfaktors für das Echtzeit-Massenschätzungssegment abhängig von der Beschleunigung, um einen korrigierten Gewichtsfaktor zu erhalten,
und dementsprechend umfasst das Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment:
Bestimmen des Massenschätzungsergebnisses für den einzelnen Fahrvorgang abhängig von dem Fahrzeugmassenschätzungsergebnis und dem korrigierten Gewichtsfaktor für jedes Echtzeit-Massenschätzungssegment.

In einer möglichen Ausführungsform umfasst das Verfahren ferner:

erneutes Erfassen eines vollständigen Echtzeit-Massenschätzungsergebnisses beim Erkennen, dass das Fahrzeug geparkt wird und die Tür des Fahrzeugs geöffnet wird, und Bestimmen eines Massenschätzungsergebnisses für einen einzelnen Fahrvorgang des Fahrzeugs abhängig von dem erneut erfassten vollständigen Echtzeit-Massenschätzungsergebnis;
oder
erneutes Erfassen eines vollständigen Echtzeit-Massenschätzungsergebnisses beim Erkennen, dass das Fahrzeug geparkt ist und die Parkdauer länger als eine voreingestellte Dauer ist, und Bestimmen eines Massenschätzungsergebnisses für einen einzelnen Fahrvorgang des Fahrzeugs abhängig von dem erneut erfassten vollständigen Echtzeit-Massenschätzungsergebnis.

In einer möglichen Ausführungsform umfasst das Verfahren ferner:
Bestimmen eines Straßenoberfläche-Kraftschlussbeiwerts in Echtzeit während des Fahrvorgangs des Fahrzeugs basierend auf durch Sensoren des Fahrzeugs erfassten Daten.
In einem zweiten Aspekt stellen die Ausführungsbeispiele der vorliegenden Anmeldung eine Vorrichtung zur Bestimmung der Masse eines Fahrzeugs bereit, die umfasst:

ein Auswahlmodul zum Auswählen mehrerer Echtzeit-Massenschätzungssegmente aus einem vollständigen Echtzeit-Massenschätzungsergebnis;
ein Ermittlungsmodul zum Ermitteln eines Fahrzeugmassenschätzungsergebnisses für jedes Echtzeit-Massenschätzungssegment; und
ein Bestimmungsmodul, das dazu verwendet wird, ein Massenschätzungsergebnis für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment zu bestimmen.

In einem dritten Aspekt stellen die Ausführungsbeispiele der vorliegenden Anmeldung ein Gerät zur Bestimmung der Masse eines Fahrzeugs bereit, das umfasst: einen Speicher und einen Prozessor;

wobei in dem Speicher computerausführbare Anweisungen gespeichert sind,
wobei der Prozessor die in dem Speicher gespeicherten computerausführbaren Anweisungen ausführt, um das Durchführen des ersten Aspekts und/oder der verschiedenen möglichen Ausführungsformen im ersten Aspekt durch den Prozessor zu ermöglichen.

In einem vierten Aspekt stellen die Ausführungsbeispiele der vorliegenden Anmeldung ein computerlesbares Speichermedium bereit, wobei in dem computerlesbaren Speichermedium computerausführbare Anweisungen gespeichert sind, die bei ihrem Ausführen durch einen Prozessor zur Implementierung des ersten Aspekts und/oder der verschiedenen möglichen Ausführungsformen im ersten Aspekt verwendet werden.
In einem fünften Aspekt stellen die Ausführungsbeispiele der vorliegenden Anmeldung ein Computerprogrammprodukt bereit, das ein Computerprogramm umfasst, wobei das Computerprogramm bei seinem Ausführen durch einen Prozessor den ersten Aspekt und/oder die verschiedenen möglichen Ausführungsformen im ersten Aspekt implementiert.
Bei dem Verfahren und der Vorrichtung zur Bestimmung der Masse eines Fahrzeugs, dem Gerät, dem Fahrzeug und dem Medium, die durch die Ausführungsbeispiele der vorliegenden Anmeldung bereitgestellt sind, werden während eines einzelnen Fahrvorgangs zunächst mehrere Echtzeit-Massenschätzungssegmente aus einem vollständigen Echtzeit-Massenschätzungsergebnis ausgewählt, dann wird ein Fahrzeugmassenschätzungsergebnis, die diesen Segmenten entspricht, ermittelt, und schließlich wird das Massenschätzungsergebnis für diesen Fahrvorgang basierend auf dem Straßenoberfläche-Kraftschlussbeiwert beim Fahren des Fahrzeugs und dem Fahrzeugmassenschätzungsergebnis bestimmt, die jeweils diesen Segmenten entsprechen. Die vorliegende Lösung berücksichtigt den Einfluss des Straßenoberfläche-Kraftschlussbeiwerts auf das Massenschätzungsergebnis und erreicht den Effekt, die Genauigkeit und Zuverlässigkeit des ermittelten Fahrzeugmassenschätzungsergebnisses zu verbessern.

## Kurzbeschreibung der Figuren

Die Zeichnungen hierin sind in die Beschreibung aufgenommen und bilden einen Teil dieser Beschreibung. Dabei zeigen sie Ausführungsbeispiele entsprechend der vorliegenden Anmeldung und dienen zusammen mit der Beschreibung zur Erläuterung der Prinzipien der vorliegenden Anmeldung. Dabei zeigen:

Fig. 1 ein schematisches Flussdiagramm eines ersten Ausführungsbeispiels eines Verfahrens zur Bestimmung der Masse eines Fahrzeugs gemäß der vorliegenden Anmeldung;
Fig. 2 ein schematisches Flussdiagramm eines dritten spezifischen Ausführungsbeispiels eines spezifischen Verfahrens zur Bestimmung der Masse eines Fahrzeugs gemäß der vorliegenden Anmeldung;
Fig. 3 eine schematische Strukturansicht eines ersten Ausführungsbeispiels einer Vorrichtung zur Bestimmung der Masse eines Fahrzeugs gemäß der vorliegenden Anmeldung;
Fig. 4 eine schematische Strukturansicht eines zweiten Ausführungsbeispiels der Vorrichtung zur Bestimmung der Masse eines Fahrzeugs gemäß der vorliegenden Anmeldung; und
Fig. 5 eine schematische Strukturansicht eines elektronischen Geräts gemäß der vorliegenden Anmeldung.

In den obigen Zeichnungen sind konkrete Ausführungsbeispiele der vorliegenden Anmeldung dargestellt. Im Folgenden werden diese noch näher beschrieben. Die Zeichnungen und Texte hierhin dienen nicht dazu, den Umfang der Idee der vorliegenden Anmeldung in irgendeiner Weise einzuschränken, sondern dazu, dem Fachmann auf diesem Gebiet den Kontext der vorliegenden Anmeldung unter Bezugnahme auf spezifische Ausführungsbeispiele der vorliegenden Anmeldung zu erläutern.

## Ausführliche Ausführungsformen

Nun werden beispielhafte Ausführungsbeispiele im Detail beschrieben, die in den Zeichnungen beispielhaft dargestellt sind. In der nachfolgenden Beschreibung, die sich auf die Zeichnungen bezieht, bezeichnen die gleichen Bezugszeichen in den verschiedenen Zeichnungen die gleichen oder ähnlichen Elemente, sofern nichts anderes angegeben ist. Die in den folgenden Ausführungsbeispielen beschriebenen Ausführungsformen stellen nicht alle mit der vorliegenden Anmeldung übereinstimmenden Ausführungsformen dar. Vielmehr handelt es sich dabei lediglich um Beispiele für die Vorrichtungen und Verfahren, die mit einigen, in den beigefügten Ansprüchen beschriebenen Aspekten der vorliegenden Anmeldung übereinstimmen.
Zuerst werden die in der vorliegenden Anmeldung betroffenen Begriffe erläutert:
Straßenoberfläche-Kraftschlussbeiwert: Der Straßenoberfläche-Kraftschlussbeiwert ist ein Schlüsselparameter zur Messung eines Rutschigkeitsgrads einer Straßenoberfläche, und seine Größe hängt von Eigenschaften der Straßenoberfläche und der Reifen ab. Typischerweise ist der Kraftschlussbeiwert auf trockenen, guten Asphalt- oder Betonstraßen hoch, während er auf rutschigen, schlammigen oder eis- bzw. schneebedeckten Straßen deutlich reduziert sein kann. Während einer Fahrt des Fahrzeugs hat die Größe des Straßenoberfläche-Kraftschlussbeiwerts einen gewissen Einfluss auf die Genauigkeit des Massenschätzungsergebnisses des Fahrzeugs.
Elektronische Steuereinheit: Die elektronische Steuereinheit (En: Electronic Control Unit, ECU) ist die zentrale Steuerungskomponente in einem Auto. Sie ist verantwortlich für das Empfangen, Verarbeiten und Speichern von Informationen von verschiedenen Sensoren und anderen Komponenten des Autos sowie für das Steuern verschiedener Systeme und Komponenten des Autos gemäß voreingestellten Programmen und Algorithmen.
Damit ein klares Verständnis der technischen Lösung der vorliegenden Anmeldung ermöglicht wird, wird im Folgenden die Lösung im Stand der Technik detailliert beschrieben.
Eine Echtzeit-Schätzung der Masse des Fahrzeugs besteht darin, dass die Basisinformationen und Fahrzustandsdaten eines Fahrzeugs in ein etabliertes Bewertungsmodell, das zur Bewertung der Masse des Fahrzeugs verwendbar ist, eingegeben werden und die eingegebenen Daten durch das Schätzmodell verarbeitet werden, sodass ein Echtzeit-Schätzungsergebnis der Masse des Fahrzeugs ermittelt werden kann. Die Genauigkeit des Schätzungsergebnisses wird von der Umgebung der befahrenen Straße beeinflusst.

Bei einer vollständigen Echtzeit-Fahrzeugmassenschätzung wird die Masse des Fahrzeugs zu jedem Zeitpunkt geschätzt, wobei das ermittelte vollständige Echtzeit-Massenschätzungsergebnis eine Gruppe von Daten ist, die mit den Umgebungsänderungen stark schwanken. Bei einem solchen Verfahren besteht das Problem, dass unterschiedliche Straßenverhältnisse zu signifikanten Abweichungen im Fahrzeugmassenschätzungsergebnis führen. Bei der Durchführung von Vorgängen wie Leistungsoptimierung, Fehlerdiagnose und Wartung des Fahrzeugs ist der Referenzwert des durch das vollständige Echtzeit-Massenschätzungsverfahren ermittelten Echtzeit-Massenschätzungsergebnisses gering.

Darüber hinaus wird in bestehenden technischen Lösungen das Leergewicht oder eine typische Masse des Fahrzeugs direkt als Massenschätzungsergebnis für den einzelnen Fahrvorgang verwendet und zur Leistungsoptimierung, Fehlerdiagnose und Wartung des Fahrzeugs usw. eingesetzt. Das auf diese Weise bestimmte Massenschätzungsergebnis weist das Problem einer geringen Genauigkeit und schlechten Zuverlässigkeit auf.

In Bezug auf die oben genannten technischen Probleme besteht die technische Idee der vorliegenden Anmeldung darin, dass unter einer vollen Berücksichtigung des Einflusses des Straßenoberfläche-Kraftschlussbeiwerts auf das Fahrzeugmassenschätzungsergebnis das schließlich ermittelte Massenschätzungsergebnis für den einzelnen Fahrvorgang abhängig von den Straßenoberfläche-Kraftschlussbeiwerten, die den einzelnen Echtzeit-Massenschätzungssegmenten entsprechen, angepasst wird. Durch eine flexible Reaktion auf den Einfluss unterschiedlicher Straßenverhältnisse auf die Genauigkeit des Massenschätzungsergebnisses verbessert das Verfahren zur Bestimmung der Masse eines Fahrzeugs, das durch die vorliegende Anmeldung bereitgestellt wird, die Genauigkeit der Fahrzeugmassenschätzung bei gleichzeitiger Sicherstellung einer rechtzeitigen Schätzung und kann die Anforderungen verschiedener Arbeitsbedingungen wie Leistungsoptimierung, Fehlerdiagnose und Wartung des Fahrzeugs erfüllen.

Das Verfahren zur Bestimmung der Masse eines Fahrzeugs, das durch die vorliegende Anmeldung bereitgestellt wird, kann die Masse des Fahrzeugs für einen einzelnen Fahrvorgang basierend auf dem Straßenoberfläche-Kraftschlussbeiwert schätzen. Es kann in der ECU des Fahrzeugs ausgeführt werden. Alternativ können zur Ausführung die für den Schätzvorgang erforderlichen relevanten Daten in andere elektronische Geräte, wie z.B. Computergeräte, importiert werden. Die spezifische Form des Geräts wird durch die vorliegende Lösung nicht beschränkt.

Nachstehend wird anhand spezifischer Ausführungsbeispiele detailliert erläutert, was die technische Lösung der vorliegenden Anmeldung ist und wie die technische Lösung der vorliegenden Anmeldung die oben genannten technischen Probleme löst. Die folgenden spezifischen Ausführungsbeispiele können miteinander kombiniert werden. Gleiche oder ähnliche Konzepte oder Vorgänge werden in einigen Ausführungsbeispielen möglicherweise nicht wiederholt beschrieben. Im Folgenden werden die Ausführungsbeispiele der vorliegenden Anmeldung unter Bezugnahme auf die Zeichnungen beschrieben.

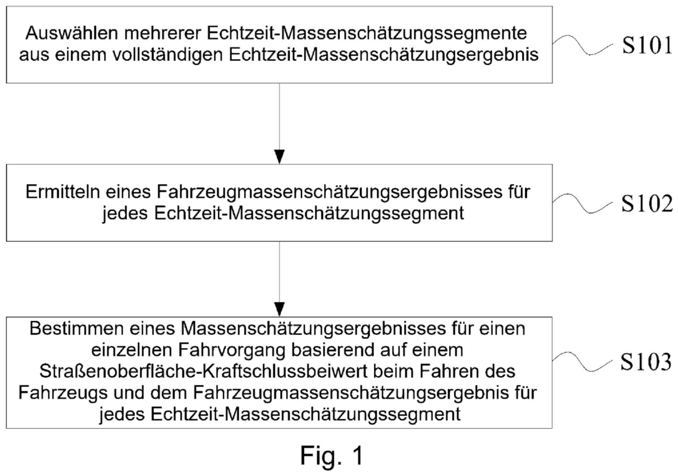

Fig. 1 zeigt ein schematisches Flussdiagramm eines ersten Ausführungsbeispiels eines Verfahrens zur Bestimmung der Masse eines Fahrzeugs gemäß der vorliegenden Anmeldung. Wie in Fig. 1 dargestellt, umfasst das Verfahren:

S101: Auswählen mehrerer Echtzeit-Massenschätzungssegmente aus einem vollständigen Echtzeit-Massenschätzungsergebnis.

In der vorliegenden Lösung können während einer Fahrt eines Fahrzeugs Sensoren des Fahrzeugs Fahrdaten des Fahrzeugs selbst und Umgebungsdaten eines befahrenen Straßenabschnitts in Echtzeit erfassen. Durch die Eingabe von Basisinformationen des Fahrzeugs selbst und von in Echtzeit erfassten Daten in ein Modell zur Massenschätzung kann das vollständige Echtzeit-Massenschätzungsergebnis ermittelt werden. Das Massenschätzungsergebnis für den einzelnen Fahrvorgang kann abhängig von dem ermittelten vollständigen Echtzeit-Massenschätzungsergebnis für den einzelnen Fahrvorgang bestimmt werden.

Das vollständige Echtzeit-Massenschätzungsergebnis umfasst die Massenschätzungsergebnisse des Fahrzeugs zu jedem Zeitpunkt. Spezifisch kann während des Fahrvorgangs des Fahrzeugs das vollständige Echtzeit-Massenschätzungsergebnis durch die Durchführung einer Echtzeit-Massenschätzung unter Verwendung eines Schätzmodells abhängig von den Basisinformationen, Fahrdaten und Umgebungsdaten des Fahrzeugs erhalten werden. Dabei sind die Basisinformationen des Fahrzeugs fahrzeugeigene Parameter, wie zum Beispiel: Leermasse, Stirnfläche, Luftwiderstandsbeiwert usw. eines Autos. Die Fahrdaten und Umgebungsdaten werden während der Fahrt des Fahrzeugs in Echtzeit erfasst, wobei zu den Fahrdaten eine Beschleunigung, eine Geschwindigkeit, ein Vorderradlenkwinkel usw. des Fahrzeugs gehören, wobei zu den Umgebungsdaten die Luftdichte und die Steigung usw. gehören.

In einer spezifischen Implementierungsform wird vor der Durchführung der Echtzeit-Massenschätzung die Leermasse des Fahrzeugs als Anfangswert des Massenschätzungsergebnisses verwendet.

In einer spezifischen Implementierungsform kann als Schätzmodell ein Kalman-Filter-Zustandsschätzmodell verwendet werden. Dabei wird das Kalman-Filter-Zustandsschätzmodell aus einer vierdimensionalen Zustand-Raum-Gleichung abgeleitet, die auf der Grundlage einer dynamischen Gleichung des Fahrzeugs in der Längsrichtung erstellt ist. Spezifisch wird zunächst die vierdimensionale Zustandsraumgleichung basierend auf der dynamischen Gleichung des Fahrzeugs in der Längsrichtung erstellt und die entsprechende Ausgangsgleichung erhalten, wobei anhand der Zustand-Raum-Gleichung und der Ausgangsgleichung das Kalman-Filter-Zustandsschätzmodell erstellt werden kann.

In einer spezifischen Implementierungsform kann die Gleichung der Fahrzeuglängsdynamik eine Gleichung der Fahrzeuglängsdynamik nach Optimierung von Parametern des Vorderradlenkwinkels sein. Spezifisch lautet die Gleichung der Fahrzeuglängsdynamik nach Optimierung von Parametern des Vorderradlenkwinkels:

$$(F_{Hinter-Antrieb} - F_{Hinter-Bremse}) + (F_{Vorder-Antrieb} - F_{Vorder-Bremse}) * cos(\beta) = mgf cos(i) + mg sin(i) + \frac{1}{2} C_D A \rho v^2 + ma$$

Dabei steht $F_{Hinter-Antrieb}$ für ein gesamtes Antriebsmoment an einer Fahrzeughinterachse, $F_{Vorder-Antrieb}$ für ein gesamtes Antriebsmoment an einer Fahrzeugvorderachse, $F_{Hinter-Bremse}$ für ein gesamtes Bremsmoment an einer Fahrzeughinterachse, $F_{Vorder-Bremse}$ für ein gesamtes Bremsmoment an einer Fahrzeugvorderachse, $\beta$ für einen Vorderradlenkwinkel, $f$ für einen Rollwiderstandsbeiwert, $m$ für eine Automasse, $g$ für die Erdbeschleunigung, $i$ für eine Steigung, $C_D$ für einen Luftwiderstandsbeiwert, $A$ für eine Stirnfläche des Fahrzeugs, $\rho$ für eine Luftdichte, $v$ für eine Geschwindigkeit des Fahrzeugs und $a$ für eine Längsbeschleunigung des Fahrzeugs.

Die aus der dynamischen Gleichung des Fahrzeugs in der Längsrichtung abgeleitete vierdimensionale Zustand-Raum-Gleichung ist wie folgt:

$$\begin{bmatrix} v_k \\ i_k \\ m_k \\ \beta_k \end{bmatrix} = \begin{bmatrix} v_{k-1} + \Delta t \left( \frac{1}{m_{k-1}}(F_{Hinter-Antrieb} - F_{Hinter-Bremse}) + \frac{1}{m_{k-1}}(F_{Vorder-Antrieb} - F_{Vorder-Bremse}) * \left(1 - \frac{\beta_{k-1}^2}{2}\right) - gf - gi_{k-1} - \frac{1}{2m_{k-1}} C_D A \rho v_{k-1}^2 \right) \\ i_{k-1} \\ m_{k-1} \\ \beta_{k-1} \end{bmatrix} + W_{K-1}$$

Dabei steht $k$ bzw. $k - 1$ für einen $k$-Zeitpunkt bzw. einen $k$-1-Zeitpunkt, $\Delta t$ für ein Zeitintervall und $W$ für ein Prozessrauschen.

Die resultierende Ausgangsgleichung, die dem System entspricht, lautet:

$$\begin{bmatrix} v_k \\ \beta_k \end{bmatrix} = \begin{bmatrix} 1 & 0 & 0 & 0 \\ 0 & 0 & 0 & 1 \end{bmatrix} \begin{bmatrix} v_k \\ i_k \\ m_k \\ \beta_k \end{bmatrix} + V_{k-1}$$

Dabei steht V für ein Messrauschen des Systems.

Basierend auf der vorstehend beschriebenen Zustandsgleichung und Ausgangsgleichung kann das Kalman-Filter-Zustandsschätzmodell erstellt werden, das zur Echtzeit-Schätzung der Masse des Fahrzeugs verwendet wird.

Bei diesem Verfahren wird das Kalman-Filter-Zustandsschätzmodell basierend auf einer Gleichung der Fahrzeuglängsdynamik nach Optimierung von Parametern des Vorderradlenkwinkels erhalten. Herkömmliche Gleichungen der Fahrzeuglängsdynamik sind für Arbeitsteilungen der Kurvenfahrten nicht geeignet; daher können die Massenschätzmodelle, die basierend auf diesen Gleichungen erstellt sind, bei der Schätzung der Masse des Fahrzeugs während der Kurvenfahrt des Fahrzeugs erhebliche Abweichungen aufweisen. Unter Berücksichtigung, dass die Änderung des Vorderradlenkwinkels während der Kurvenfahrt des Fahrzeugs eine Änderung der auf das Fahrzeug wirkenden Längskräfte des Fahrzeugs bewirkt, kann die Gleichung der Fahrzeuglängsdynamik durch die Einführung der Parameter des Vorderradlenkwinkels in die herkömmliche Gleichung der Fahrzeuglängsdynamik optimiert werden. Das Schätzmodell, das auf der Grundlage der Gleichung der Fahrzeuglängsdynamik nach Optimierung der Parameter des Vorderradlenkwinkels erstellt wird, kann während der Kurvenfahrt des Fahrzeugs eine höhere Schätzgenauigkeit aufweisen, was wiederum die Stabilität und Genauigkeit des ermittelten Echtzeit-Massenschätzungsergebnisses sicherstellt.

In diesem Schritt berücksichtigt die vorliegende Lösung vollständig die Eigenschaft, dass die Masse des Fahrzeugs während des Fahrvorgangs des Fahrzeugs im Wesentlichen stabil bleibt. Durch das Auswählen mehrerer Echtzeit-Massenschätzungssegmente aus dem vollständigen Echtzeit-Massenschätzungsergebnis und das Durchführen der Massenschätzung für den einzelnen Fahrvorgang abhängig von den ausgewählten mehreren Echtzeit-Massenschätzungssegmenten wird die Gesamteffizienz bei der Schätzung verbessert.

Die Anzahl der ausgewählten Echtzeit-Massenschätzungssegmente wird dabei durch dieses Ausführungsbeispiel nicht beschränkt.

S102: Ermitteln eines Fahrzeugmassenschätzungsergebnisses für jedes Echtzeit-Massenschätzungssegment.

In diesem Schritt enthält jedes Echtzeit-Massenschätzungssegment nach dem Auswählen der mehreren Echtzeit-Massenschätzungssegmente aus dem vollständigen Echtzeit-Massenschätzungsergebnis mehrere Abtastpunkte, wobei jeder Abtastpunkt einem Massenschätzungsergebnis entspricht. Beispielsweise werden für jedes Echtzeit-Massenschätzungssegment 100 Abtastpunkte genommen, wobei jeder Abtastpunkt einem Massenschätzungsergebnis entspricht. Daher ist es in diesem Schritt erforderlich, die Massenschätzungsergebnisse, die den mehreren Abtastpunkten in jedem Echtzeit-Massenschätzungssegment entsprechen, zu ermitteln und zu verarbeiten, um das Fahrzeugmassenschätzungsergebnis für jedes Echtzeit-Massenschätzungssegment zu erhalten.

In einer spezifischen Implementierungsform kann das Ermitteln des Fahrzeugmassenschätzungsergebnisses für jedes Echtzeit-Massenschätzungssegment wie folgt erfolgen:

Berechnen, für jedes Echtzeit-Massenschätzungssegment, eines Mittelwerts von Massenschätzungsergebnissen mehrerer Abtastpunkte in dem Echtzeit-Massenschätzungssegment, um ein Fahrzeugmassenschätzungsergebnis für das Echtzeit-Massenschätzungssegment zu erhalten.

Bei diesem Verfahren wird durch die Verwendung des Mittelwerts der mehreren Abtastpunkte in diesem Echtzeit-Massenschätzungssegment als das dem Segment entsprechende Fahrzeugmassenschätzungsergebnis der Einfluss unsicherer Faktoren auf das Massenschätzungsergebnis reduziert, die Genauigkeit, Zuverlässigkeit und Stabilität des dem Segment entsprechenden Massenschätzungsergebnisses verbessert, wodurch auch die Genauigkeit des schließlich ermittelten Fahrzeugmassenschätzungsergebnisses verbessert wird.

In einer spezifischen Implementierungsform können vor dem Berechnen des Mittelwerts der Massenschätzungsergebnisse der mehreren Abtastpunkte in dem Echtzeit-Massenschätzungssegment die Massenschätzungsergebnisse der mehreren Abtastpunkte auch wie folgt verarbeitet werden:

Entfernen anormaler Daten aus den Massenschätzungsergebnissen der mehreren Abtastpunkte in dem Echtzeit-Massenschätzungssegment, um verarbeitete Massenschätzungsergebnisse der mehreren Abtastpunkte zu erhalten; wobei dementsprechend das "Berechnen eines Mittelwerts von Massenschätzungsergebnissen mehrerer Abtastpunkte in dem Echtzeit-Massenschätzungssegment" umfasst: Berechnen eines Mittelwerts der verarbeiteten Massenschätzungsergebnisse der mehreren Abtastpunkte.

Dabei sind die anormalen Daten Echtzeit-Massenschätzungsergebnisse, die zu stark vom wahren Wert abweichen. Insbesondere wenn ein Massenschätzungsergebnis über der voll beladenen Masse plus einem voreingestellten Schwellenwert liegt oder das Massenschätzungsergebnis unter der Leermasse minus einem voreingestellten Schwellenwert liegt, wird das Massenschätzungsergebnis als anomale Daten bestimmt, die vom wahren Wert abweichen. Dabei wird die Größe des voreingestellten Schwellenwerts entsprechend der tatsächlichen Situation festgelegt und durch die vorliegende Lösung nicht beschränkt.

Bei diesem Verfahren wird durch das Entfernen der anormalen Daten aus den Massenschätzungsergebnissen der mehreren Abtastpunkte in dem Echtzeit-Massenschätzungssegment der Einfluss unsicherer Faktoren auf das Massenschätzungsergebnis effektiv reduziert, was wiederum die Genauigkeit sowie Zuverlässigkeit des ermittelten Fahrzeugmassenschätzungsergebnisses für jedes Echtzeit-Massenschätzungssegment weiter verbessert.

S103: Bestimmen eines Massenschätzungsergebnisses für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment.

In diesem Schritt wird der Einfluss des Straßenoberfläche-Kraftschlussbeiwerts auf die Genauigkeit des Fahrzeugmassenschätzungsergebnisses vollständig berücksichtigt. Die Größe des Straßenoberfläche-Kraftschlussbeiwerts kann dabei die Straßenverhältnisse während der Fahrt charakterisieren und die Größe der Reibungskraft zwischen dem Reifen und der Straßenoberfläche auf einem befahrenen Straßenabschnitt widerspiegeln, was wiederum die Genauigkeit des Massenschätzungsergebnisses widerspiegelt, das durch Massenschätzung für diesen Fahrabschnitt erhalten wird. Während des einzelnen Fahrvorgangs des Fahrzeugs kann dadurch, dass das schließlich ermittelte Massenschätzungsergebnis für den einzelnen Fahrvorgang abhängig von den den einzelnen Echtzeit-Massenschätzungssegmenten entsprechenden Straßenoberfläche-Kraftschlussbeiwerten angepasst wird, der Einfluss unterschiedlicher Straßenverhältnisse auf die Genauigkeit des Massenschätzungsergebnisses reduziert und die Genauigkeit der schließlich ermittelten Fahrzeugmassenschätzung für den einzelnen Fahrvorgang verbessert werden.

In einer spezifischen Implementierungsform umfasst das Bestimmen eines Massenschätzungsergebnisses für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment:

Erster Schritt: Bestimmen eines Gewichtsfaktors für jedes Echtzeit-Massenschätzungssegment abhängig von dem Straßenoberfläche-Kraftschlussbeiwert beim Fahren des Fahrzeugs für das Echtzeit-Massenschätzungssegment.

In diesem Schritt kann der Straßenoberfläche-Kraftschlussbeiwert während des Fahrvorgangs des Fahrzeugs basierend auf den durch Sensoren des Fahrzeugs erfassten Daten in Echtzeit bestimmt werden. Die Sensoren des Fahrzeugs umfassen, sind aber nicht beschränkt auf, eine Trägheitsmesseinheit (En: Inertial Measurement Unit, IMU), einen Raddrehzahlsensor usw.

Die Größe des Straßenoberfläche-Kraftschlussbeiwerts, der einem Echtzeit-Massenschätzungssegment entspricht, spiegelt die Genauigkeit des Massenschätzungsergebnisses wider, das diesem Echtzeit-Massenschätzungssegment entspricht. Daher sind in der vorliegenden Lösung jedem Echtzeit-Massenschätzungssegment abhängig von der Größe des diesem Segment entsprechenden Straßenoberfläche-Kraftschlussbeiwerts unterschiedliche Gewichtsfaktoren zugeordnet. Dies kann die Genauigkeit des schließlich ermittelten Massenschätzungsergebnisses für den einzelnen Fahrvorgang verbessern und kann mit verschiedenen Arbeitsbedingungen zurechtkommen. Dabei kann die Größe des Gewichtsfaktors die Größe der Abweichung des dem Echtzeit-Massenschätzungssegment entsprechenden Massenschätzungsergebnisses vom wahren Wert widerspiegeln. Wenn die Abweichung des Massenschätzungsergebnisses für das Echtzeit-Massenschätzungssegment vom wahren Wert kleiner ist, wird diesem Echtzeit-Massenschätzungssegment ein Gewichtsfaktor mit einem größeren numerischen Wert zugeordnet, andernfalls wird ein kleinerer Gewichtsfaktor zugeordnet.

In einer spezifischen Implementierungsform umfasst das "Bestimmen eines Gewichtsfaktors für das Echtzeit-Massenschätzungssegment abhängig von dem Straßenoberfläche-Kraftschlussbeiwert beim Fahren des Fahrzeugs für das Echtzeit-Massenschätzungssegment":

Bestimmen eines Gewichtsfaktors, der einem Bereich des Straßenoberfläche-Kraftschlussbeiwerts entspricht, als Gewichtsfaktor, der dem Echtzeit-Massenschätzungssegment entspricht, basierend auf einer voreingestellten Zuordnungsbeziehung zwischen Kraftschlussbeiwert-Bereichen und Gewichtsfaktoren sowie basierend auf dem Straßenoberfläche-Kraftschlussbeiwert beim Fahren des Fahrzeugs für das Echtzeit-Massenschätzungssegment.

Beispielhaft kann die Zuordnungsbeziehung zwischen Kraftschlussbeiwert-Bereichen und Gewichtsfaktoren durch die folgenden zwei Methoden bestimmt werden:

Erste Methode: Es wird direkt festgelegt, dass unterschiedliche Kraftschlussbeiwert-Bereiche unterschiedlichen Gewichtsfaktoren entsprechen.

Zweite Methode: Zuerst wird eine Haftungsklasse basierend auf einem Bereich, in dem sich der Kraftschlussbeiwert befindet, bestimmt; und dann wird der Gewichtsfaktor basierend auf der Beziehung zwischen verschiedenen Klassen und Gewichtsfaktoren bestimmt. Beispielsweise wird der Kraftschlussbeiwert 0 bis 0,3 als erste Klasse festgelegt; der Kraftschlussbeiwert 0,3 bis 0,6 wird als zweite Klasse festgelegt; der Kraftschlussbeiwert 0,6 bis 1 wird als dritte Klasse festgelegt. Die Auswahl der Kraftschlussbeiwert-Bereiche und die Methode zur Klassifizierung werden durch die vorliegende Lösung nicht beschränkt.

Basierend auf den oben genannten zwei Arten der Zuordnungsbeziehung zwischen Kraftschlussbeiwert-Bereichen und Gewichtsfaktoren sowie basierend auf dem Kraftschlussbeiwert für das Echtzeit-Massenschätzungssegment kann der diesem Segment entsprechende Gewichtsfaktor bestimmt werden. Beispielsweise wird dem Segment ein Gewichtsfaktor von 0,2 zugeordnet, wenn der Kraftschlussbeiwert für das Echtzeit-Massenschätzungssegment in der ersten Klasse liegt; dem Segment wird ein Gewichtsfaktor von 0,5 zugeordnet, wenn der Kraftschlussbeiwert für das Echtzeit-Massenschätzungssegment in der zweiten Klasse liegt; dem Segment wird ein Gewichtsfaktor von 1 zugeordnet, wenn der Kraftschlussbeiwert für das Echtzeit-Massenschätzungssegment in der dritten Klasse liegt. Wie ein einer Klasse entsprechender Gewichtsfaktor spezifisch festgelegt wird, wird durch die vorliegende Lösung nicht beschränkt.

Zweiter Schritt: Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment.

In diesem Schritt kann das endgültige Massenschätzungsergebnis für den einzelnen Fahrvorgang durch Datenverarbeitung der den mehreren Echtzeit-Massenschätzungssegmenten entsprechenden Fahrzeugmassenschätzungsergebnisse und der entsprechenden Gewichtsfaktoren ermittelt werden. Dieses Massenschätzungsergebnis weist eine höhere Zuverlässigkeit, Genauigkeit und Anpassungsfähigkeit an die Umgebung auf.

In einer spezifischen Implementierungsform kann das Massenschätzungsergebnis für den einzelnen Fahrvorgang erhalten werden, indem ein gewichtetes Mitteln von den Fahrzeugmassenschätzungsergebnissen für mehrere Echtzeit-Massenschätzungssegmente abhängig von dem Gewichtsfaktor für jedes Echtzeit-Massenschätzungssegment erfolgt.

Beispielhaft werden während eines bestimmten Fahrvorgangs insgesamt drei Echtzeit-Massenschätzungssegmente ausgewählt, wobei ein erstes Segment einem Fahrzeugmassenschätzungsergebnis von $M_1$ und einem Gewichtsfaktor von $A_1$ entspricht; wobei ein zweites Segment einem Fahrzeugmassenschätzungsergebnis von $M_2$ und einem Gewichtsfaktor von $A_2$ entspricht; wobei ein drittes Segment einem Fahrzeugmassenschätzungsergebnis

von $M_3$ und einem Gewichtsfaktor von $A_2$ entspricht. Das schließlich ermittelte Massenschätzungsergebnis für den einzelnen Fahrvorgang M ist:

$$M = \frac{(A_1 * M_1 + A_2 * M_2 + A_2 * M_3)}{(A_1 + A_2 + A_2)}$$

In einer spezifischen Implementierungsform kann das Verfahren vor dem Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment ferner umfassen:

Ermitteln der Beschleunigung des Fahrzeugs innerhalb eines voreingestellten Zeitraums vor jedem Echtzeit-Massenschätzungssegment;
Korrigieren des Gewichtsfaktors für das Echtzeit-Massenschätzungssegment abhängig von der Beschleunigung, um einen korrigierten Gewichtsfaktor zu erhalten;
wobei dementsprechend das Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment umfasst: Bestimmen des Massenschätzungsergebnisses für den einzelnen Fahrvorgang abhängig von dem Fahrzeugmassenschätzungsergebnis und dem korrigierten Gewichtsfaktor für jedes Echtzeit-Massenschätzungssegment.

Bei diesem Verfahren wird der dem Segment entsprechende Gewichtsfaktor abhängig von der Beschleunigung des Fahrzeugs innerhalb des voreingestellten Zeitraums vor dem extrahierten Echtzeit-Massenschätzungssegment korrigiert. Innerhalb des voreingestellten Zeitraums vor dem Echtzeit-Massenschätzungssegment gilt: wenn die Beschleunigung des Fahrzeugs größer als ein bestimmter Schwellenwert ist (dies deutet darauf hin, dass das dem Segment entsprechende Fahrzeugmassenschätzungsergebnis zu groß ist), wird der dem Segment entsprechende Gewichtsfaktor reduziert; wenn die Beschleunigung kleiner als ein bestimmter Schwellenwert ist (dies deutet darauf hin, dass das dem Segment entsprechende Fahrzeugmassenschätzungsergebnis zu klein ist), wird der dem Segment entsprechende Gewichtsfaktor erhöht. Der voreingestellte Zeitraum wird je nach Umständen bestimmt und durch die vorliegende Lösung nicht beschränkt.
Beispielhaft wird ein Echtzeit-Massenschätzungssegment zwischen der 15. und 20. Sekunde nach Fahrtbeginn des Autos ausgewählt, wobei abhängig von dem Kraftschlussbeiwert dieses Segments der diesem Segment entsprechende Gewichtsfaktor als 1 bestimmt wird. Die Beschleunigung innerhalb 30 ms vor diesem Segment wird beurteilt: Wenn die Beschleunigung des Fahrzeugs innerhalb der 30 ms vor diesem Segment -5 m/s$^2$ beträgt, wird der diesem Segment entsprechende Gewichtsfaktor auf 1,05 korrigiert. Die Daten in diesem Beispiel werden basierend auf persönlichen Erfahrungen angegeben, und bei der vorliegenden Lösung gibt es keine Einschränkungen hinsichtlich der Einstellung der numerischen Werte in diesen Daten.
In einer spezifischen Implementierungsform umfasst das Verfahren zur Bestimmung der Masse eines Fahrzeugs gemäß diesem Ausführungsbeispiel ferner:
erneutes Erfassen eines vollständigen Echtzeit-Massenschätzungsergebnisses beim Erkennen, dass das Fahrzeug geparkt wird und die Tür des Fahrzeugs geöffnet wird, und Bestimmen eines Massenschätzungsergebnisses für einen einzelnen Fahrvorgang des Fahrzeugs abhängig von dem erneut erfassten vollständigen Echtzeit-Massenschätzungsergebnis; erneutes Erfassen eines vollständigen Echtzeit-Massenschätzungsergebnisses beim Erkennen, dass das Fahrzeug geparkt ist und seine Parkdauer länger als eine voreingestellte Dauer ist, und Bestimmen eines Massenschätzungsergebnisses für einen einzelnen Fahrvorgang des Fahrzeugs abhängig von dem erneut erfassten vollständigen Echtzeit-Massenschätzungsergebnis.
Bei diesem Verfahren muss nach der Bestimmung des Massenschätzungsergebnisses für den einzelnen Fahrvorgang durch die obigen Schritte beurteilt werden, ob das Fahrzeugmassenschätzungsergebnis zurückgesetzt werden soll. Wenn die Beurteilung ergibt, dass ein Zurücksetzen erforderlich ist, werden die Schritte S101 bis S103 erneut durchgeführt, um das Massenschätzungsergebnis für den nächsten Fahrvorgang zu bestimmen. Darüber hinaus bleibt das Massenschätzungsergebnis des aktuellen Fahrvorgangs vor dem Zurücksetzen des Ergebnisses unverändert. Es gibt zwei Möglichkeiten zur Beurteilung, ob das Fahrzeugmassenschätzungsergebnis zurückgesetzt werden soll:

Erste Möglichkeit: Das Fahrzeug wird geparkt und seine Tür wird geöffnet;
Zweite Möglichkeit: Das Fahrzeug ist geparkt und seine Parkdauer ist länger als eine voreingestellte Dauer. Dabei wird die voreingestellte Dauer je nach spezifischer Anwendung bestimmt und durch die vorliegende Lösung nicht beschränkt.

Bei dem Verfahren zur Bestimmung der Masse eines Fahrzeugs gemäß diesem Ausführungsbeispiel werden zunächst mehrere Echtzeit-Massenschätzungssegmente aus einem vollständigen Echtzeit-Massenschätzungsergebnis ausgewählt; anschließend wird ein Fahrzeugmassenschätzungsergebnis für jedes Echtzeit-Massenschätzungssegment ermittelt; und schließlich wird ein Massenschätzungsergebnis für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment bestimmt. Dieses Ausführungsbeispiel berücksichtigt vollständig die Besonderheit, dass das Fahrzeug während des einzelnen Fahrvorgangs des Fahrzeugs im Wesentlichen stabil bleiben kann. Durch die Verwendung mehrerer ausgewählter Echtzeit-Massenschätzungssegmente zur Schätzung des einzelnen Fahrvorgangs kann das Massenschätzungsergebnis effizienter ermittelt werden. Zudem wird bei diesem Ausführungsbeispiel der Einfluss des Straßenoberfläche-Kraftschlussbeiwerts auf die Genauigkeit des Massenschätzungsergebnisses berücksichtigt, wobei das schließlich ermittelte Massenschätzungsergebnis für den einzelnen Fahrvorgang durch die Verwendung der den einzelnen Echtzeit-Massenschätzungssegmenten entsprechenden Straßenoberfläche-Kraftschlussbeiwerte angepasst wird, wodurch der Einfluss unterschiedlicher Straßenverhältnisse auf die Genauigkeit des Massenschätzungsergebnisses reduziert und die Genauigkeit der schließlich ermittelten Fahrzeugmassenschätzung für den einzelnen Fahrvorgang verbessert wird.

Basierend auf dem vorstehend beschriebenen Ausführungsbeispiel stellt die vorliegende Anmeldung auch ein zweites Ausführungsbeispiel des Verfahrens zur Bestimmung der Masse eines Fahrzeugs bereit, das beschreibt, wie mehrere Echtzeit-Massenschätzungssegmente aus einem vollständigen Echtzeit-Massenschätzungsergebnis ausgewählt werden, und das lautet:

Das Auswählen mehrerer Echtzeit-Massenschätzungssegmente aus einem vollständigen Echtzeit-Massenschätzungsergebnis kann ferner umfassen:
Auswählen mehrerer Echtzeit-Massenschätzungssegmente aus dem vollständigen Echtzeit-Massenschätzungsergebnis abhängig von einem Straßenoberflächentyp während des einzelnen Fahrvorgangs des Fahrzeugs, wobei die Anzahl der ausgewählten Echtzeit-Massenschätzungssegmente je nach dem Straßenoberflächentyp unterschiedlich ist.

In diesem Ausführungsbeispiel wird die Anzahl der ausgewählten Echtzeit-Massenschätzungssegmente abhängig von dem Straßenoberflächentyp während des einzelnen Fahrvorgangs des Fahrzeugs bestimmt. Für den einzelnen Fahrvorgang kann der Straßenoberflächentyp während des einzelnen Fahrvorgangs nach dem Starten des Fahrzeugs mithilfe von Fahrzeugsensoren, wie beispielsweise einer Bordkamera, bestimmt werden. Wenn der Straßenoberflächentyp als schlechtere Straßenverhältnisse bestimmt wird, werden eine größere Anzahl von Echtzeit-Massenschätzungssegmenten ausgewählt; andernfalls werden eine kleinere Anzahl von Echtzeit-Massenschätzungssegmenten ausgewählt. Die Entsprechung zwischen dem Straßenoberflächentyp und der Anzahl der auszuwählenden Echtzeit-Massenschätzungssegmente wird durch die vorliegende Lösung nicht beschränkt.

In einer spezifischen Implementierungsform kann der Straßenoberflächentyp während eines einzelnen Fahrvorgangs wie folgt bestimmt werden:
Während des Fahrvorgangs des Fahrzeugs werden die erfassten Straßenoberflächenbilder unter Verwendung eines vortrainierten Algorithmus zur Klassifizierung von Straßenoberflächen klassifiziert, um den Straßenoberflächentyp für diesen Fahrvorgang zu erhalten.

Spezifisch erfasst ein Fahrerassistenzsystem (En: Advanced Driver Assistance System, ADAS) oder eine fortschrittliche Fahrsteuerung mittels einer Bordkamera Straßenoberflächenbilder und klassifiziert die Straßenoberflächenbilder unter Verwendung eines vortrainierten Algorithmus zur Klassifizierung von Straßenoberflächen. Das Klassifizierungsergebnis wird über ein Fahrzeugkommunikationsnetzwerk an die ECU gesendet, die zur Implementierung der Fahrzeugmassenschätzung verwendet wird. Dabei umfasst das Fahrzeugkommunikationsnetzwerk, ist aber nicht beschränkt auf, das Flexray-Kommunikationsprotokoll, das Controller Area Network (CAN), das CAN mit flexibler Datenrate (CANFD) usw. Außerdem sind die zum Vortrainieren verwendeten Trainingsdaten eine große Menge zuvor erfasster Straßenoberflächenbilder. Und das Klassifizierungsergebnis kann in Form eines digitalen Signals an die ECU gesendet werden, die zur Implementierung der Fahrzeugmassenschätzung verwendet wird.

In einer spezifischen Implementierungsform sollte verstanden werden, dass der Straßenoberflächentyp während der Fahrt des Fahrzeugs in Echtzeit aktualisiert werden kann. Spezifisch sendet das ADAS oder die fortschrittliche Fahrsteuerung nach jedem Zeitraum das neue Klassifizierungsergebnis über das Fahrzeugkommunikationsnetzwerk an die ECU, die zur Implementierung der Fahrzeugmassenschätzung verwendet wird. Die Festlegung des Zeitraums wird dabei je nach tatsächlichen Umständen bestimmt und durch die vorliegende Anmeldung nicht beschränkt. Beispielhaft wird der Straßenoberflächentyp in der ECU, die zur Implementierung der Fahrzeugmassenschätzung verwendet wird, alle 5 Minuten aktualisiert.

In einer spezifischen Implementierungsform umfasst der Straßenoberflächentyp einen der folgenden Typen: schneebedeckte Straßenoberfläche; unbefestigte Straßenoberfläche; überflutete Straßenoberfläche; und trocken asphaltierte Straßenoberfläche.

Beispielhaft werden sieben Echtzeit-Massenschätzungssegmente aus dem vollständigen Echtzeit-Massenschätzungsergebnis ausgewählt, wenn die Straßenoberfläche dieses Fahrvorgangs als schneebedeckte Straßenoberfläche klassifiziert wird; drei Echtzeit-Massenschätzungssegmente werden aus dem vollständigen Echtzeit-Massenschätzungsergebnis ausgewählt, wenn die Straßenoberfläche dieses Fahrvorgangs als trocken asphaltierte Straßenoberfläche klassifiziert wird. Die Daten in diesem Beispiel werden erfahrungsgemäß angegeben. In der praktischen Anwendung wird die Anzahl der auszuwählenden Echtzeit-Massenschätzungssegmente, die dem Straßenoberflächentyp entspricht, durch die vorliegende Lösung nicht beschränkt.

In einer spezifischen Implementierungsform kann das "Auswählen mehrerer Echtzeit-Massenschätzungssegmente aus dem vollständigen Echtzeit-Massenschätzungsergebnis abhängig vom Straßenoberflächentyp während eines einzelnen Fahrvorgangs des Fahrzeugs" ferner umfassen:

Auswählen mehrerer Echtzeit-Massenschätzungssegmente aus dem vollständigen Echtzeit-Massenschätzungsergebnis abhängig von dem Straßenoberflächentyp während des einzelnen Fahrvorgangs des Fahrzeugs und voreingestellten Auswahlregeln für Echtzeit-Massenschätzungssegmente, wobei die Auswahlregeln für Echtzeit-Massenschätzungssegmente mindestens eine einschränkende Bedingung für Fahrdaten des Fahrzeugs umfassen.

In einer spezifischen Implementierungsform umfassen die Auswahlregeln Einschränkungen der ausgewählten Segmente in folgenden Aspekten, sind aber nicht darauf beschränkt:

die Größe der Geschwindigkeit, der Beschleunigung und des Antriebsmoments des Fahrzeugs, und ob Funktionen einer Traktionskontrolle (TC), eines Antiblockiersystems (ABS) und einer Gierstabilitätskontrolle (YSC) des Fahrzeugs aktiviert sind.

In der praktischen Anwendung wird in der vorliegenden Lösung nicht beschränkt, wie die Auswahlregeln eingestellt werden.

Spezifisch umfassen die Auswahlregeln für Echtzeit-Massenschätzungssegmente mindestens eine der folgenden Bedingungen:

dass die Geschwindigkeit des Fahrzeugs größer als eine voreingestellte Geschwindigkeit ist;
dass die Beschleunigung des Fahrzeugs größer als eine voreingestellte Beschleunigung ist;
dass das Antriebsmoment des Fahrzeugs größer als ein voreingestelltes Drehmoment ist; und
dass Funktionen der Traktionskontrolle (En: Traction Control System, TC), des Antiblockiersystems (En: Anti-lock Braking System, ABS) und der Gierstabilitätskontrolle (En: Yaw Stability Control, YSC) des Fahrzeugs nicht aktiviert sind.

Beispielhaft gehören zu den Auswahlregeln für Echtzeit-Massenschätzungssegmente: Geschwindigkeit des Fahrzeugs größer als 15 km/h; Beschleunigung des Fahrzeugs größer als 1 m/s$^2$; Antriebsmoment größer als 1000 Nm; keine Aktivierung von TC, ABS, YSC, usw.

Bei diesem Verfahren können bei der Auswahl mehrerer Echtzeit-Massenschätzungssegmente aus dem vollständigen Echtzeit-Massenschätzungsergebnis die ausgewählten Echtzeit-Massenschätzungssegmente gemäß den voreingestellten Auswahlregeln für Echtzeit-Massenschätzungssegmente weiter gefiltert werden, wodurch der Einfluss unsicherer Faktoren auf das Massenschätzungsergebnis effektiv reduziert werden kann und die Genauigkeit und Zuverlässigkeit des ermittelten Massenschätzungsergebnisses weiter verbessert werden kann.

Das durch dieses Ausführungsbeispiel bereitgestellte Verfahren zur Bestimmung der Masse eines Fahrzeugs verfeinert auf der Grundlage des vorstehend beschriebenen Ausführungsbeispiels, wie mehrere Echtzeit-Massenschätzungssegmente aus einem vollständigen Echtzeit-Massenschätzungsergebnis ausgewählt werden. Zunächst wird der Straßenoberflächentyp während eines einzelnen Fahrvorgangs des Fahrzeugs bestimmt, dann wird die Anzahl der auszuwählenden Echtzeit-Massenschätzungssegmente abhängig von dem bestimmten Straßenoberflächentyp bestimmt, und schließlich wird die entsprechende Anzahl von Echtzeit-Massenschätzungssegmenten aus dem vollständigen Echtzeit-Massenschätzungsergebnis ausgewählt. Bei diesem Ausführungsbeispiel wird der Einfluss des Straßenoberflächentyps auf das Massenschätzungsergebnis vollständig berücksichtigt. Bei Straßenoberflächentypen mit schlechten Straßenverhältnissen werden durch die Auswahl einer größeren Anzahl von Echtzeit-Massenschätzungssegmenten mehr Datenreferenzen gewonnen, wodurch die Genauigkeit und Zuverlässigkeit des schließlich ermittelten Massenschätzungsergebnisses für einen einzelnen Fahrvorgang verbessert wird. Bei Straßenoberflächentypen mit besseren Straßenverhältnissen kann durch die Auswahl einer kleineren Anzahl von Echtzeit-Massenschätzungssegmenten die Berechnungseffizienz signifikant verbessert und das Massenschätzungsergebnis für einen einzelnen Fahrvorgang effizienter ermittelt werden. Daher kann die vorliegende Lösung bei einer gleichzeitigen effizienten Ermittlung des Fahrzeugmassenschätzungsergebnisses die Genauigkeit, Zuverlässigkeit und Anpassungsfähigkeit an die Umgebung des ermittelten Schätzungsergebnisses gewährleisten.

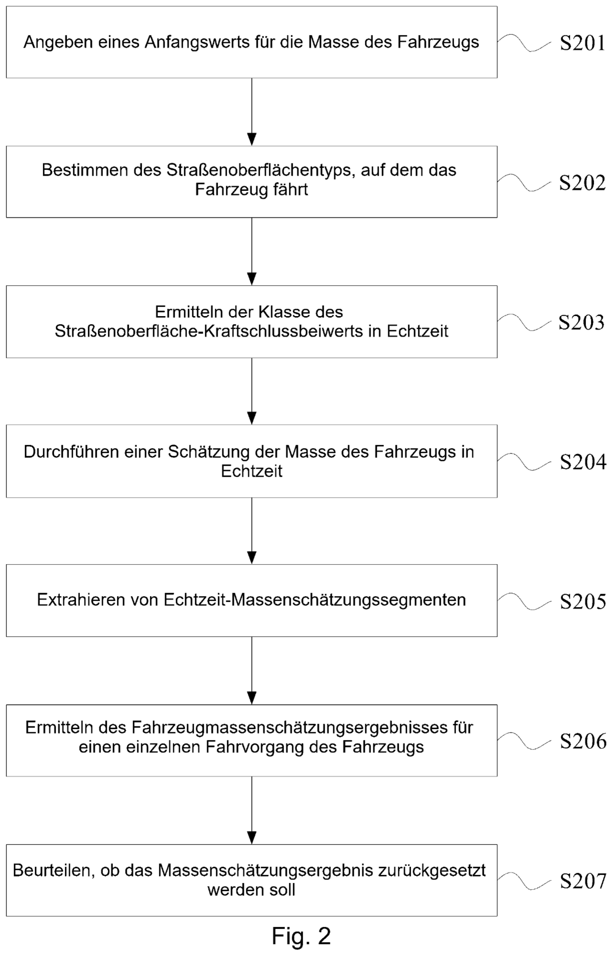

Fig. 2 zeigt ein schematisches Flussdiagramm eines dritten Ausführungsbeispiels eines spezifischen Verfahrens zur Bestimmung der Masse gemäß der vorliegenden Anmeldung. Wie in Fig. 2 dargestellt, umfasst das Verfahren:

S201: Angeben eines Anfangswerts für die Fahrzeugmasse.

Nach dem Einschalten des Fahrzeugs wird die zur Fahrzeugmassenschätzung verwendete ECU aktiviert, wobei die Leermasse des Fahrzeugs als der Anfangswert des Massenschätzungsergebnisses verwendet wird.

S202: Bestimmen des Straßenoberflächentyps, auf dem das Fahrzeug fährt.

Nach dem Starten des Fahrzeugs erfasst das ADAS oder die fortschrittliche Fahrsteuerung Bildinformationen zum Fahrzeugbetrieb über eine Bordkamera und klassifiziert die Straßenoberflächenbilder unter Verwendung eines vortrainierten Funktionsmoduls zur Klassifizierung von Straßenoberflächentypen.

Dabei basiert das Training des Funktionsmoduls zur Klassifizierung von Straßenoberflächentypen auf einem relativ standardisierten Klassifizierungskriterium, das durch das Sammeln und Klassifizieren einer großen Menge von Straßenoberflächensignalen während der Entwicklungsphase der Massenschätzungsfunktion erhalten wird.

Dabei klassifiziert das Funktionsmodul die Straßenoberflächeninformationen in drei Straßenoberflächentypen. Die spezifischen Straßenoberflächentypen sind wie folgt: Eine erste Straßenoberfläche ist schneebedeckte Straßenoberfläche oder unbefestigte Straßenoberfläche, eine zweite Straßenoberfläche ist großflächig überflutete Straßenoberfläche aufgrund von Regenwasser oder dergleichen, und eine dritte Straßenoberfläche ist trocken asphaltierte Straßenoberfläche.

Nachdem das Funktionsmodul zur Klassifizierung von Straßenoberflächentypen den Straßenoberflächentyp des aktuellen Fahrvorgangs bestimmt hat, wird der Straßenoberflächentyp in Form von digitalen Signalen 1, 2, 3 über das Fahrzeugnetzwerk an die zur Massenschätzung verwendete ECU gesendet.

Dabei entsprechen die digitalen Signale 1, 2, 3 jeweils der ersten Straßenoberfläche, der zweiten Straßenoberfläche und der dritten Straßenoberfläche. Das Fahrzeugnetzwerk kann das Flexray-Kommunikationsprotokoll, CAN, CANFD usw. sein.

Zudem wird der Straßenoberflächentyp alle 5 Minuten aktualisiert, d.h. das ADAS oder die Fortschrittliche Fahrsteuerung sendet alle 5 Minuten einen aktualisierten Straßenoberflächentyp über das Fahrzeugnetzwerk an die zur Massenschätzung verwendete ECU.

S203: Echtzeit-Ermitteln der Straßenoberfläche-Haftungsklasse.

Das Echtzeit-Ermitteln des Straßenoberfläche-Kraftschlussbeiwerts wird basierend auf Signalen abgeschlossen, die von Fahrzeugsensoren wie der IMU, dem Raddrehzahlsensor usw. erfasst sind.

Der in Echtzeit ermittelte Straßenoberfläche-Kraftschlussbeiwert wird in drei Klassen unterteilt. Insbesondere wird ein Kraftschlussbeiwert mit einem numerischen Wert von 0 bis 0,3 als erste Klasse bestimmt, die einer Straßenoberfläche mit niedriger Haftung entspricht; wobei ein Kraftschlussbeiwert mit einem numerischen Wert von 0,3 bis 0,6 als zweite Klasse bestimmt wird, die einer Straßenoberfläche mit mittlerer Haftung entspricht; wobei ein Kraftschlussbeiwert mit einem numerischen Wert von 0,6 bis 1 als dritte Klasse bestimmt wird, die einer Straßenoberfläche mit hoher Haftung entspricht.

S204: Durchführen einer Echtzeit-Schätzung der Fahrzeugmasse.

Die vierdimensionale Zustand-Raum-Gleichung wird basierend auf der dynamischen Gleichung in der Längsrichtung nach der Optimierung des Vorderradlenkwinkels erstellt, und das Kalman-Filter-Zustandsschätzmodell wird basierend auf der Zustandsgleichung und der entsprechenden Ausgangsgleichung erstellt.

Die in Echtzeit erfassten Basisinformationen, Fahrdaten und Umgebungsdaten des Fahrzeugs werden in das Kalman-Filter-Zustandsschätzmodell eingegeben, um das vollständige Echtzeit-Massenschätzungsergebnis zu erhalten.

S205: Extrahieren von Echtzeit-Massenschätzungssegmenten.

Echtzeit-Massenschätzungssegmente, die die Segmentauswahlregeln erfüllen, werden extrahiert, wobei für jedes Segment 100 Abtastpunkte festgelegt sind.

Die Anzahl der zu extrahierenden Segmente wird abhängig von dem in S202 bestimmten Straßenoberflächentyp des aktuellen Fahrvorgangs bestimmt. Dabei entsprechen der ersten Straßenoberfläche sieben zu extrahierende Segmente, wobei der zweiten Straßenoberfläche fünf zu extrahierende Segmente entsprechen, und wobei der dritten Straßenoberfläche drei zu extrahierende Segmente entsprechen.

Anormale Daten werden aus den Massenschätzungsergebnissen mehrerer Abtastpunkte in jedem Echtzeit-Massenschätzungssegment entfernt. Dabei sind die anormalen Daten als Massenschätzungsergebnisse außerhalb eines voreingestellten Bereichs definiert, wobei der voreingestellte Bereich lautet: [Leermasse des Fahrzeugs - voreingestellter Schwellenwert, voll beladene Masse des Fahrzeugs + voreingestellter Schwellenwert].

Der Mittelwert der verbleibenden Massenschätzungsergebnisse innerhalb des Segments wird als das Fahrzeugmassenschätzungsergebnis dieses Segments verwendet.

S206: Ermitteln des Fahrzeugmassenschätzungsergebnisses für einen einzelnen Fahrvorgang des Fahrzeugs.

Für die Massenschätzungsergebnisse der mehreren Echtzeit-Massenschätzungssegmente wird der Gewichtsfaktor für das Echtzeit-Massenschätzungssegment basierend auf dem in S203 ermittelten Ergebnis der Haftungsklasse der Straßenoberfläche festgelegt. Dabei entspricht die erste Klasse einem Gewichtsfaktor von 0,3, wobei die zweite Klasse einem Gewichtsfaktor von 0,5 und dritte Klasse einem Gewichtsfaktor von 1 entspricht.

Der Gewichtsfaktor für das Echtzeit-Massenschätzungssegment wird abhängig von einer Beschleunigung des Fahrzeugs innerhalb eines voreingestellten Zeitraums vor dem Echtzeit-Massenschätzungssegment korrigiert.

Die Fahrzeugmassenschätzungsergebnisse für die einzelnen Echtzeit-Massenschätzungssegmente werden basierend auf dem korrigierten Gewichtsfaktor einem gewichteten Mitteln unterzogen, um das Fahrzeugmassenschätzungsergebnis für den aktuellen Fahrvorgang zu erhalten.

S207: Beurteilen, ob das Massenschätzungsergebnis zurückgesetzt werden soll.

Bei Personenkraftwagen werden ein Fahrzeugparksignal und ein Türöffnungs-/Türschließsignal als Beurteilungsgrundlage für das Zurücksetzen der Massenschätzung verwendet. Wenn die oben genannten zwei Signale auf 1 gesetzt sind, wird der vorstehend beschriebene Massenschätzungszyklus zurückgesetzt; und es wird zu Schritt S201 gesprungen, um mit der Massenschätzung für den nächsten Fahrvorgang zu beginnen.

Bei Nutzfahrzeugen werden ein Fahrzeugparksignal und ein Signal "Parkdauer größer als 5 Minuten" als Beurteilungsgrundlage für das Zurücksetzen der Massenschätzung verwendet. Wenn die oben genannten zwei Signale auf 1 gesetzt sind, wird der vorstehend beschriebene Massenschätzungszyklus zurückgesetzt; und es wird zu Schritt S201 gesprungen, um mit der Massenschätzung für den nächsten Fahrvorgang zu beginnen.

Das durch dieses Ausführungsbeispiel bereitgestellte Verfahren zur Bestimmung der Masse eines Fahrzeugs berücksichtigt den Einfluss des Straßenoberfläche-Kraftschlussbeiwerts und des Straßenoberflächentyps auf das Massenschätzungsergebnis. Zunächst wird die Anzahl der ausgewählten Segmente abhängig von dem Straßenoberflächentyp bestimmt, anschließend wird der dem Segment entsprechende Gewichtsfaktor abhängig von dem Straßenoberfläche-Kraftschlussbeiwert bestimmt, und abschließend wird das gewichtete Mitteln der Massenschätzungsergebnisse mehrerer Segmente abhängig von dem Gewichtsfaktor durchgeführt. Bei gleichzeitiger Sicherstellung einer rechtzeitigen Schätzung wird die Genauigkeit der Fahrzeugmassenschätzung unter verschiedenen Umgebungsbedingungen verbessert.

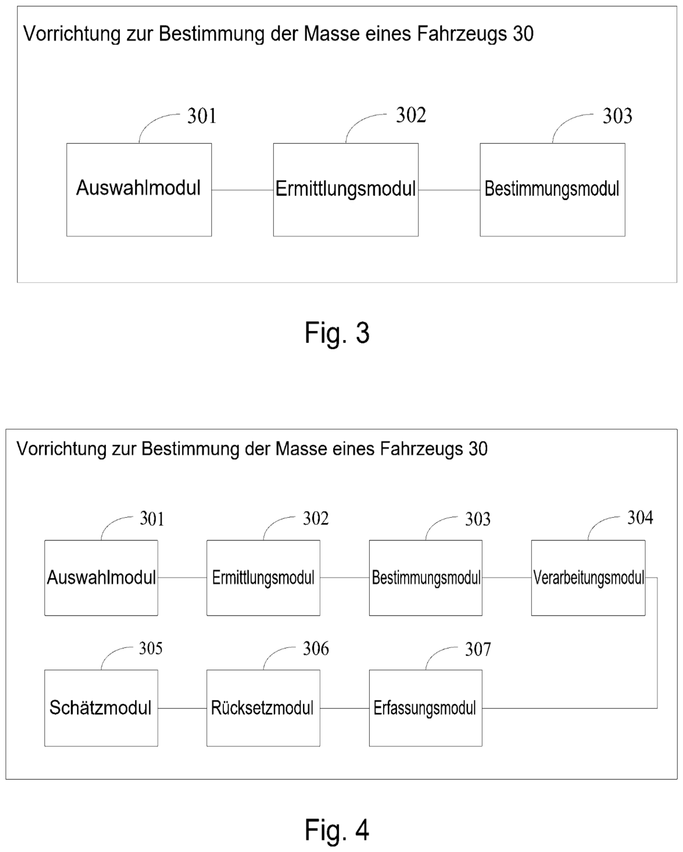

Fig. 3 zeigt eine schematische Strukturansicht eines ersten Ausführungsbeispiels einer Vorrichtung zur Bestimmung der Masse eines Fahrzeugs gemäß der vorliegenden Anmeldung. Wie in Fig. 3 dargestellt, umfasst die durch dieses Ausführungsbeispiel bereitgestellte Vorrichtung zur Bestimmung der Masse eines Fahrzeugs 30:

ein Auswahlmodul 301 zum Auswählen mehrerer Echtzeit-Massenschätzungssegmente aus einem vollständigen Echtzeit-Massenschätzungsergebnis;

ein Ermittlungsmodul 302 zum Ermitteln eines Fahrzeugmassenschätzungsergebnisses für jedes Echtzeit-Massenschätzungssegment; und

ein Bestimmungsmodul 303, das dazu verwendet wird, ein Massenschätzungsergebnis für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment zu bestimmen.

In einer möglichen Implementierungsform wird das Auswahlmodul 301 spezifisch zu Folgendem verwendet,

Auswählen mehrerer Echtzeit-Massenschätzungssegmente aus dem vollständigen Echtzeit-Massenschätzungsergebnis abhängig von einem Straßenoberflächentyp während des einzelnen Fahrvorgangs des Fahrzeugs, wobei die Anzahl der ausgewählten Echtzeit-Massenschätzungssegmente je nach dem Straßenoberflächentyp unterschiedlich ist.

In einer möglichen Implementierung kann das Auswahlmodul 301 auch zu Folgendem verwendet werden: Auswählen mehrerer Echtzeit-Massenschätzungssegmente aus dem vollständigen Echtzeit-Massenschätzungsergebnis abhängig von dem Straßenoberflächentyp während des einzelnen Fahrvorgangs des Fahrzeugs und voreingestellten Auswahlregeln für Echtzeit-Massenschätzungssegmente, wobei die Auswahlregeln für Echtzeit-Massenschätzungssegmente mindestens eine einschränkende Bedingung für Fahrdaten des Fahrzeugs umfassen.

In einer möglichen Implementierungsform umfassen die Auswahlregeln für Echtzeit-Massenschätzungssegmente mindestens eine der folgenden Bedingungen: dass die Geschwindigkeit des Fahrzeugs größer als eine voreingestellte Geschwindigkeit ist; dass die Beschleunigung des Fahrzeugs größer als eine voreingestellte Beschleunigung ist; dass das Antriebsmoment des Fahrzeugs größer als ein voreingestelltes Drehmoment ist; und dass die Funktionen von Traktionskontrolle (TC), Antiblockiersystem (ABS) und Gierstabilitätskontrolle (YSC) des Fahrzeugs nicht aktiviert sind.

In einer möglichen Implementierungsform wird das Ermittlungsmodul 302 spezifisch zu Folgendem verwendet,

Berechnen eines Mittelwerts von Massenschätzungsergebnissen mehrerer Abtastpunkte in jedem Echtzeit-Massenschätzungssegment, um ein Fahrzeugmassenschätzungsergebnis für das Echtzeit-Massenschätzungssegment zu erhalten.

In einer möglichen Implementierung kann das Ermittlungsmodul 302 auch zu Folgendem verwendet werden:

Entfernen anormaler Daten aus den Massenschätzungsergebnissen der mehreren Abtastpunkte in dem Echtzeit-Massenschätzungssegment, um verarbeitete Massenschätzungsergebnisse der mehreren Abtastpunkte zu erhalten;

wobei dementsprechend das Berechnen eines Mittelwerts von Massenschätzungsergebnissen mehrerer Abtastpunkte in dem Echtzeit-Massenschätzungssegment umfasst:
Berechnen eines Mittelwerts der verarbeiteten Massenschätzungsergebnisse der mehreren Abtastpunkte.

In einer möglichen Implementierungsform wird das Bestimmungsmodul 303 spezifisch zu Folgendem verwendet:

Bestimmen eines Gewichtsfaktors für jedes Echtzeit-Massenschätzungssegment abhängig von dem Straßenoberfläche-Kraftschlussbeiwert beim Fahren des Fahrzeugs für das Echtzeit-Massenschätzungssegment; und
Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment.

In einer möglichen Implementierungsform kann das Bestimmungsmodul 303 ferner zu Folgendem verwendet werden:
gewichtetes Mitteln von Fahrzeugmassenschätzungsergebnissen für mehrere Echtzeit-Massenschätzungssegmente abhängig von dem Gewichtsfaktor für jedes Echtzeit-Massenschätzungssegment, um das Massenschätzungsergebnis für den einzelnen Fahrvorgang zu erhalten.
In einer möglichen Implementierungsform kann das Bestimmungsmodul 303 ferner zu Folgendem verwendet werden:
Bestimmen eines Gewichtsfaktors, der einem Bereich des Straßenoberfläche-Kraftschlussbeiwerts entspricht, als Gewichtsfaktor für das Echtzeit-Massenschätzungssegment basierend auf einer voreingestellten Zuordnungsbeziehung zwischen Kraftschlussbeiwert-Bereichen und Gewichtsfaktoren sowie basierend auf dem Straßenoberfläche-Kraftschlussbeiwert beim Fahren des Fahrzeugs für das Echtzeit-Massenschätzungssegment.
In einer möglichen Implementierungsform kann das Bestimmungsmodul 303 ferner zu Folgendem verwendet werden:

Ermitteln der Beschleunigung des Fahrzeugs innerhalb eines voreingestellten Zeitraums vor jedem Echtzeit-Massenschätzungssegment;
Korrigieren des Gewichtsfaktors für das Echtzeit-Massenschätzungssegment abhängig von der Beschleunigung, um einen korrigierten Gewichtsfaktor zu erhalten;
wobei dementsprechend das Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment umfasst:
Bestimmen des Massenschätzungsergebnisses für den einzelnen Fahrvorgang abhängig von dem Fahrzeugmassenschätzungsergebnis und dem korrigierten Gewichtsfaktor für jedes Echtzeit-Massenschätzungssegment.

Die durch dieses Ausführungsbeispiel bereitgestellte Vorrichtung zur Bestimmung der Masse eines Fahrzeugs wird dazu verwendet, die technischen Lösungen in einem der vorstehenden Verfahrensausführungsbeispiele auszuführen, wobei das Implementierungsprinzip und die technischen Effekte ähnlich sind und hier nicht wiederholt werden.
Fig. 4 zeigt eine schematische Strukturansicht eines zweiten Ausführungsbeispiels einer Vorrichtung zur Bestimmung der Masse eines Fahrzeugs gemäß der vorliegenden Anmeldung. Basierend auf der vorstehend beschriebenen Vorrichtung 30 zur Bestimmung der Masse eines Fahrzeugs umfasst diese Vorrichtung 30 zur Bestimmung der Masse eines Fahrzeugs ferner:
Ein Verarbeitungsmodul 304, das dazu verwendet wird, die erfassten Straßenoberflächenbilder unter Verwendung eines vortrainierten Algorithmus zur Klassifizierung von Straßenoberflächen während des Fahrvorgangs des Fahrzeugs zu klassifizieren, um den Straßenoberflächentyp zu erhalten.
In einer möglichen Implementierungsform umfasst der Straßenoberflächentyp einen der folgenden Typen: schneebedeckte Straßenoberfläche; unbefestigte Straßenoberfläche; überflutete Straßenoberfläche; und trocken asphaltierte Straßenoberfläche.
Ein Schätzmodul 305, das dazu verwendet wird, eine Echtzeit-Massenschätzung unter Verwendung eines Kalman-Filter-Zustandsschätzmodells während des Fahrvorgangs des Fahrzeugs abhängig von den Basisinformationen, Fahrdaten und Umgebungsdaten des Fahrzeugs durchzuführen, um das vollständige Echtzeit-Massenschätzungsergebnis zu erhalten;
wobei das Kalman-Filter-Zustandsschätzmodell aus einer vierdimensionalen Zustand-Raum-Gleichung abgeleitet ist, die auf der Grundlage einer dynamischen Gleichung des Fahrzeugs in der Längsrichtung nach der Optimierung von Parametern eines Vorderradlenkwinkels erstellt ist.
Ein Rücksetzmodul 306, das dazu verwendet wird, zu beurteilen, ob das Massenschätzungsergebnis zurückgesetzt werden soll:

erneutes Erfassen eines vollständigen Echtzeit-Massenschätzungsergebnisses beim Erkennen, dass das Fahrzeug geparkt wird und die Tür des Fahrzeugs geöffnet wird, und Bestimmen eines Massenschätzungsergebnisses für einen einzelnen Fahrvorgang des Fahrzeugs abhängig von dem erneut erfassten vollständigen Echtzeit-Massenschätzungsergebnis;

wenn erkannt wird, dass das Fahrzeug geparkt ist und seine Parkdauer länger als eine voreingestellte Dauer ist, wird ein vollständiges Echtzeit-Massenschätzungsergebnis erneut erfasst, wobei ein Massenschätzungsergebnis für einen einzelnen Fahrvorgang des Fahrzeugs abhängig von dem erneut erfassten vollständigen Echtzeit-Massenschätzungsergebnis bestimmt wird.

Eine Erfassungseinrichtung 307, die dazu verwendet wird, basierend auf den durch die Sensoren des Fahrzeugs erfassten Daten einen Straßenoberfläche-Kraftschlussbeiwert in Echtzeit während des Fahrvorgangs des Fahrzeugs zu bestimmen.

Die durch dieses Ausführungsbeispiel bereitgestellte Vorrichtung zur Bestimmung der Masse eines Fahrzeugs kann das durch die vorstehend beschriebenen Verfahrensausführungsbeispiele bereitgestellte Verfahren ausführen, wobei das Implementierungsprinzip und die technischen Effekte ähnlich sind und in diesem Ausführungsbeispiel nicht wiederholt werden.

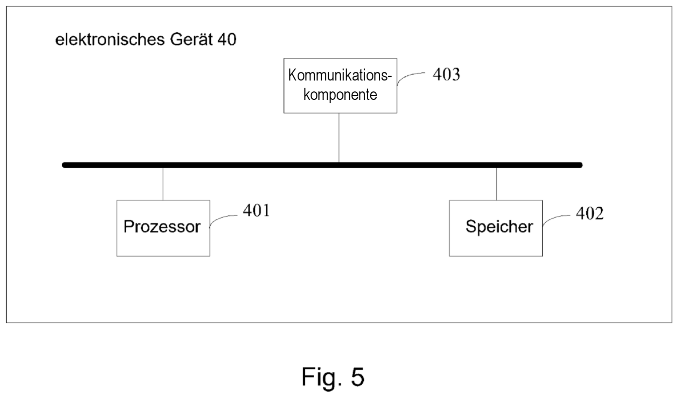

Fig. 5 zeigt eine schematische Strukturansicht eines elektronischen Geräts gemäß der vorliegenden Anmeldung. Wie in Fig. 5 dargestellt, umfasst das durch dieses Ausführungsbeispiel bereitgestellte elektronische Gerät 40 mindestens einen Prozessor 401 und einen Speicher 402. Optional umfasst das Gerät 40 ferner eine Kommunikationskomponente 403. Dabei sind der Prozessor 401, der Speicher 402 und die Kommunikationskomponente 403 über einen Bus 404 verbunden.

In einem spezifischen Implementierungsvorgang führt der mindestens eine Prozessor 401 die im Speicher 402 gespeicherten computerausführbaren Anweisungen aus, so dass der mindestens eine Prozessor 401 das vorstehend beschriebene Verfahren ausführt.

Bezüglich des spezifischen Implementierungsvorgangs des Prozessors 401 wird auf die vorstehend beschriebenen Verfahrensausführungsbeispiele verwiesen, wobei das Implementierungsprinzip und die technischen Effekte ähnlich sind und in diesem Ausführungsbeispiel nicht wiederholt werden.

Durch die vorliegende Anmeldung wird ferner ein Fahrzeug bereitgestellt, das das elektronische Gerät 40 umfasst, wobei das elektronische Gerät 40 eine elektronische Steuereinheit des Fahrzeugs sein kann. In einem spezifischen Implementierungsvorgang wird das elektronische Gerät 40 im Fahrzeug dazu verwendet, das in den vorstehend beschriebenen Verfahrensausführungsbeispielen beschriebene Verfahren zur Bestimmung der Masse eines Fahrzeugs zu implementieren.

Durch die vorliegende Anmeldung wird ferner ein computerlesbares Speichermedium bereitgestellt, auf dem computerausführbare Anweisungen gespeichert sind. Wenn der Prozessor die computerausführbaren Anweisungen ausführt, kann das in den vorstehend beschriebenen Verfahrensausführungsbeispielen beschriebene Verfahren zur Bestimmung der Masse eines Fahrzeugs implementiert werden.

Durch die vorliegende Anmeldung wird ferner ein Computerprogrammprodukt bereitgestellt, das ein Computerprogramm umfasst. Wenn das Computerprogramm von einem Prozessor ausgeführt wird, kann das in den vorstehend beschriebenen Verfahrensausführungsbeispielen beschriebene Verfahren zur Bestimmung der Masse eines Fahrzeugs implementiert werden.

Letztlich soll beachtet werden, dass sich der Fachmann unter Rücksichtnahme auf die Beschreibung und nach der praktischen Umsetzung der hierin offenbarten Erfindungen leicht weitere Ausführungen der vorliegenden Anmeldung vorstellen kann. Die vorliegende Anmeldung zielt darauf ab, jegliche Varianten, Anwendungszwecke oder adaptive Änderungen der vorliegenden Anmeldung abzudecken, und solche Varianten, Anwendungszwecke oder adaptiven Änderungen folgen den allgemeinen Prinzipien der vorliegenden Anmeldung und umfassen allgemein bekanntes Fachwissen oder gewöhnliches technisches Mittel, das in der vorliegenden Anmeldung nicht offenbart ist, auf diesem Gebiet. Die Beschreibung und die Ausführungsbeispiele werden lediglich als beispielhaft angesehen und der tatsächliche Umfang und Geist der vorliegenden Anmeldung wird durch die nachfolgenden Ansprüche angegeben. Die vorliegende Anmeldung ist nicht auf die genauen Strukturen beschränkt, die vorstehend beschrieben und in den Zeichnungen dargestellt wurden. Und es können verschiedene Modifikationen und Änderungen vorgenommen werden, ohne vom Schutzumfang der vorliegenden Anmeldung abzuweichen. Der Umfang der vorliegenden Anmeldung ist ausschließlich durch die beigefügten Ansprüche eingeschränkt.

**Patentansprüche**

1. Verfahren zur Bestimmung der Masse eines Fahrzeugs, **dadurch gekennzeichnet, dass** das Verfahren umfasst:

Auswählen mehrerer Echtzeit-Massenschätzungssegmente aus einem vollständigen Echtzeit-Massenschätzungsergebnis;

Ermitteln eines Fahrzeugmassenschätzungsergebnisses für jedes Echtzeit-Massenschätzungssegment; und Bestimmen eines Massenschätzungsergebnisses für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment.

2. Verfahren nach Anspruch 1, **dadurch gekennzeichnet, dass** das Bestimmen eines Massenschätzungsergebnisses für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment umfasst:

   Bestimmen eines Gewichtsfaktors für jedes Echtzeit-Massenschätzungssegment abhängig von dem Straßenoberfläche-Kraftschlussbeiwert beim Fahren des Fahrzeugs für das Echtzeit-Massenschätzungssegment; und Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment.

3. Verfahren nach Anspruch 2, **dadurch gekennzeichnet, dass** das Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment umfasst:

   gewichtetes Mitteln von Fahrzeugmassenschätzungsergebnissen für mehrere Echtzeit-Massenschätzungssegmente abhängig von dem Gewichtsfaktor für jedes Echtzeit-Massenschätzungssegment, um das Massenschätzungsergebnis für den einzelnen Fahrvorgang zu erhalten.

4. Verfahren nach Anspruch 2, **dadurch gekennzeichnet, dass** das Bestimmen eines Gewichtsfaktors für das Echtzeit-Massenschätzungssegment abhängig von dem Straßenoberfläche-Kraftschlussbeiwert beim Fahren des Fahrzeugs für das Echtzeit-Massenschätzungssegment umfasst:

   Bestimmen eines Gewichtsfaktors, der einem Bereich des Straßenoberfläche-Kraftschlussbeiwerts entspricht, als Gewichtsfaktor für das Echtzeit-Massenschätzungssegment basierend auf einer voreingestellten Zuordnungsbeziehung zwischen Kraftschlussbeiwert-Bereichen und Gewichtsfaktoren sowie basierend auf dem Straßenoberfläche-Kraftschlussbeiwert beim Fahren des Fahrzeugs für das Echtzeit-Massenschätzungssegment.

5. Verfahren nach einem der Ansprüche 1 bis 4, **dadurch gekennzeichnet, dass** das Auswählen mehrerer Echtzeit-Massenschätzungssegmente aus einem vollständigen Echtzeit-Massenschätzungsergebnis umfasst:
   Auswählen mehrerer Echtzeit-Massenschätzungssegmente aus dem vollständigen Echtzeit-Massenschätzungsergebnis abhängig von einem Straßenoberflächentyp während des einzelnen Fahrvorgangs des Fahrzeugs, wobei die Anzahl der ausgewählten Echtzeit-Massenschätzungssegmente je nach dem Straßenoberflächentyp unterschiedlich ist.

6. Verfahren nach Anspruch 5, **dadurch gekennzeichnet, dass** das Auswählen mehrerer Echtzeit-Massenschätzungssegmente aus dem vollständigen Echtzeit-Massenschätzungsergebnis abhängig von einem Straßenoberflächentyp während des einzelnen Fahrvorgangs des Fahrzeugs umfasst:

   Auswählen mehrerer Echtzeit-Massenschätzungssegmente aus dem vollständigen Echtzeit-Massenschätzungsergebnis abhängig von dem Straßenoberflächentyp während des einzelnen Fahrvorgangs des Fahrzeugs und voreingestellten Auswahlregeln für Echtzeit-Massenschätzungssegmente, wobei die Auswahlregeln für Echtzeit-Massenschätzungssegmente mindestens eine einschränkende Bedingung für Fahrdaten des Fahrzeugs umfassen.

7. Verfahren nach Anspruch 6, **dadurch gekennzeichnet, dass** die Auswahlregeln für Echtzeit-Massenschätzungssegmente mindestens eine der folgenden Bedingungen umfassen:

   dass die Geschwindigkeit des Fahrzeugs größer als eine voreingestellte Geschwindigkeit ist; dass die Beschleunigung des Fahrzeugs größer als eine voreingestellte Beschleunigung ist; dass das Antriebsmoment des Fahrzeugs größer als ein voreingestelltes Drehmoment ist; und dass die Funktionen von Traktionskontrolle (TC), Antiblockiersystem (ABS) und Gierstabilitätskontrolle (YSC) des Fahrzeugs nicht aktiviert sind.

8. Verfahren nach Anspruch 5, **dadurch gekennzeichnet, dass** das Verfahren ferner umfasst:

Klassifizieren von erfassten Straßenoberflächenbildern unter Verwendung eines vorher trainierten Algorithmus zur Klassifizierung von Straßenoberflächen während eines Fahrvorgangs des Fahrzeugs, um den Straßenoberflächentyp zu erhalten.

9. Verfahren nach Anspruch 5, **dadurch gekennzeichnet, dass** der Straßenoberflächentyp einen der folgenden Typen umfasst:

schneebedeckte Straßenoberfläche;
unbefestigte Straßenoberfläche;
überflutete Straßenoberfläche;
und trocken asphaltierte Straßenoberfläche.

10. Verfahren nach einem der Ansprüche 1 bis 4, **dadurch gekennzeichnet, dass** das Ermitteln eines Fahrzeugmassenschätzungsergebnisses für jedes Echtzeit-Massenschätzungssegment umfasst:
Berechnen eines Mittelwerts von Massenschätzungsergebnissen mehrerer Abtastpunkte in jedem Echtzeit-Massenschätzungssegment, um ein Fahrzeugmassenschätzungsergebnis für das Echtzeit-Massenschätzungssegment zu erhalten.

11. Verfahren nach Anspruch 10, **dadurch gekennzeichnet, dass** das Verfahren vor dem Berechnen eines Mittelwerts von Massenschätzungsergebnissen mehrerer Abtastpunkte in jedem Echtzeit-Massenschätzungssegment ferner umfasst:

Entfernen anormaler Daten aus den Massenschätzungsergebnissen der mehreren Abtastpunkte in dem Echtzeit-Massenschätzungssegment, um verarbeitete Massenschätzungsergebnisse der mehreren Abtastpunkte zu erhalten,
wobei dementsprechend das Berechnen eines Mittelwerts von Massenschätzungsergebnissen mehrerer Abtastpunkte in dem Echtzeit-Massenschätzungssegment umfasst:
Berechnen eines Mittelwerts der verarbeiteten Massenschätzungsergebnisse der mehreren Abtastpunkte.

12. Verfahren nach einem der Ansprüche 1 bis 4, **dadurch gekennzeichnet, dass** das Verfahren ferner umfasst:

Durchführen einer Echtzeit-Massenschätzung unter Verwendung eines Kalman-Filter-Zustandsschätzmodells während des Fahrvorgangs des Fahrzeugs abhängig von Basisinformationen, Fahrdaten und Umgebungsdaten des Fahrzeugs, um das vollständige Echtzeit-Massenschätzungsergebnis zu erhalten,
wobei das Kalman-Filter-Zustandsschätzmodell aus einer vierdimensionalen Zustand-Raum-Gleichung abgeleitet ist, die auf der Grundlage einer dynamischen Gleichung des Fahrzeugs in der Längsrichtung nach der Optimierung von Parametern eines Vorderradlenkwinkels erstellt ist.

13. Verfahren nach einem der Ansprüche 2 bis 4, **dadurch gekennzeichnet, dass** das Verfahren vor dem Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment ferner umfasst:

Ermitteln der Beschleunigung des Fahrzeugs innerhalb eines voreingestellten Zeitraums vor jedem Echtzeit-Massenschätzungssegment; und
Korrigieren des Gewichtsfaktors für das Echtzeit-Massenschätzungssegment abhängig von der Beschleunigung, um einen korrigierten Gewichtsfaktor zu erhalten;
wobei dementsprechend das Bestimmen des Massenschätzungsergebnisses für den einzelnen Fahrvorgang abhängig von dem Fahrzeugmassenschätzungsergebnis und dem Gewichtsfaktor für jedes Echtzeit-Massenschätzungssegment umfasst:
Bestimmen des Massenschätzungsergebnisses für den einzelnen Fahrvorgang abhängig von dem Fahrzeugmassenschätzungsergebnis und dem korrigierten Gewichtsfaktor für jedes Echtzeit-Massenschätzungssegment.

14. Verfahren nach einem der Ansprüche 1 bis 4, **dadurch gekennzeichnet, dass** das Verfahren ferner umfasst:

erneutes Erfassen eines vollständigen Echtzeit-Massenschätzungsergebnisses beim Erkennen, dass das Fahrzeug geparkt wird und die Tür des Fahrzeugs geöffnet wird, und Bestimmen eines Massenschätzungsergebnisses für einen einzelnen Fahrvorgang des Fahrzeugs abhängig von dem erneut erfassten vollständigen Echtzeit-Massenschätzungsergebnis;
oder
erneutes Erfassen eines vollständigen Echtzeit-Massenschätzungsergebnisses beim Erkennen, dass das Fahrzeug geparkt ist und die Parkdauer länger als eine voreingestellte Dauer ist, und Bestimmen eines Massenschätzungsergebnisses für einen einzelnen Fahrvorgang des Fahrzeugs abhängig von dem erneut erfassten vollständigen Echtzeit-Massenschätzungsergebnis.

15. Verfahren nach einem der Ansprüche 1 bis 4, **dadurch gekennzeichnet, dass** das Verfahren ferner umfasst: Bestimmen eines Straßenoberfläche-Kraftschlussbeiwerts in Echtzeit während des Fahrvorgangs des Fahrzeugs basierend auf durch Sensoren des Fahrzeugs erfassten Daten.

16. Vorrichtung zur Bestimmung der Masse eines Fahrzeugs, **dadurch gekennzeichnet, dass** das Verfahren umfasst:

ein Auswahlmodul zum Auswählen mehrerer Echtzeit-Massenschätzungssegmente aus einem vollständigen Echtzeit-Massenschätzungsergebnis;
ein Ermittlungsmodul zum Ermitteln eines Fahrzeugmassenschätzungsergebnisses für jedes Echtzeit-Massenschätzungssegment; und
ein Bestimmungsmodul, das dazu verwendet wird, ein Massenschätzungsergebnis für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment zu bestimmen.

17. Elektronisches Gerät, **dadurch gekennzeichnet, dass** es umfasst: einen Speicher und einen Prozessor;

wobei in dem Speicher computerausführbare Anweisungen gespeichert sind,
wobei der Prozessor die in dem Speicher gespeicherten computerausführbaren Anweisungen ausführt, um das Durchführen eines Verfahrens nach einem der Ansprüche 1 bis 14 durch den Prozessor zu ermöglichen.

18. Fahrzeug, **dadurch gekennzeichnet, dass** es ein elektronisches Gerät nach Anspruch 17 umfasst.

19. Computerlesbares Speichermedium, **dadurch gekennzeichnet, dass** in dem computerlesbaren Speichermedium computerausführbare Anweisungen gespeichert sind, die bei ihrem Ausführen durch einen Prozessor zur Implementierung eines Verfahrens nach einem der Ansprüche 1 bis 14 verwendet werden.

Auswählen mehrerer Echtzeit-Massenschätzungssegmente aus einem vollständigen Echtzeit-Massenschätzungsergebnis ⌒ S101

Ermitteln eines Fahrzeugmassenschätzungsergebnisses für jedes Echtzeit-Massenschätzungssegment ⌒ S102

Bestimmen eines Massenschätzungsergebnisses für einen einzelnen Fahrvorgang basierend auf einem Straßenoberfläche-Kraftschlussbeiwert beim Fahren des Fahrzeugs und dem Fahrzeugmassenschätzungsergebnis für jedes Echtzeit-Massenschätzungssegment ⌒ S103

Fig. 1

```
┌─────────────────────────────────────────────┐
│  Angeben eines Anfangswerts für die Masse    │ ～ S201
│            des Fahrzeugs                       │
└─────────────────────────────────────────────┘
                      │
                      ▼
┌─────────────────────────────────────────────┐
│  Bestimmen des Straßenoberflächentyps, auf   │ ～ S202
│           dem das Fahrzeug fährt              │
└─────────────────────────────────────────────┘
                      │
                      ▼
┌─────────────────────────────────────────────┐
│         Ermitteln der Klasse des             │ ～ S203
│  Straßenoberfläche-Kraftschlussbeiwerts in   │
│               Echtzeit                        │
└─────────────────────────────────────────────┘
                      │
                      ▼
┌─────────────────────────────────────────────┐
│  Durchführen einer Schätzung der Masse des   │ ～ S204
│          Fahrzeugs in Echtzeit                │
└─────────────────────────────────────────────┘
                      │
                      ▼
┌─────────────────────────────────────────────┐
│  Extrahieren von Echtzeit-                   │ ～ S205
│       Massenschätzungssegmenten               │
└─────────────────────────────────────────────┘
                      │
                      ▼
┌─────────────────────────────────────────────┐
│  Ermitteln des Fahrzeugmassenschätzungs-     │ ～ S206
│  ergebnisses für einen einzelnen             │
│      Fahrvorgang des Fahrzeugs                │
└─────────────────────────────────────────────┘
                      │
                      ▼
┌─────────────────────────────────────────────┐
│  Beurteilen, ob das Massenschätzungs-        │ ～ S207
│  ergebnis zurückgesetzt werden soll          │
└─────────────────────────────────────────────┘
```

Fig. 2

Vorrichtung zur Bestimmung der Masse eines Fahrzeugs 30

301

Auswahlmodul

302

Ermittlungsmodul

303

Bestimmungsmodul

Fig. 3

Vorrichtung zur Bestimmung der Masse eines Fahrzeugs 30

301

Auswahlmodul

302

Ermittlungsmodul

303

Bestimmungsmodul

304

Verarbeitungsmodul

305

Schätzmodul

306

Rücksetzmodul

307

Erfassungsmodul

Fig. 4

Fig. 5

Europäisches
Patentamt

European
Patent Office

Office européen
des brevets

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>A | US 10 337 909 B2 (HITACHI CONSTRUCTION MACH CO [JP]) 2. Juli 2019 (2019-07-02)<br>* Spalte 1, Zeile 29 - Zeile 62 *<br>* Spalte 2, Zeile 6 - Zeile 46 *<br>* Spalte 6, Zeile 24 - Zeile 51 *<br>* Spalte 8, Zeile 44 - Spalte 10, Zeile 20 *<br>* Spalte 14, Zeile 36 - Zeile 64 *<br>* Spalte 16, Zeile 52 - Spalte 17, Zeile 22 *<br>* Abbildungen 1-7 *<br>----- | 1-11, 13-19<br><br>12 | INV.<br>G01G19/08 |
| X<br><br>A | CN 103 229 027 A (HAWES AND T CO LTD) 31. Juli 2013 (2013-07-31)<br>* Absatz [0042] - Absatz [0095] *<br>* Abbildungen 1-9 *<br>----- | 1-11, 13-19<br><br>12 | |

**RECHERCHIERTE SACHGEBIETE (IPC)**

G01G

Der vorliegende Recherchenbericht wurde für alle Patentansprüche erstellt

| Recherchenort | Abschlußdatum der Recherche | Prüfer |
|---|---|---|
| Den Haag | 12. März 2026 | Koch, Florian |

# EP 4 741 779 A1

## ANHANG ZUM EUROPÄISCHEN RECHERCHENBERICHT
## ÜBER DIE EUROPÄISCHE PATENTANMELDUNG NR.

EP 25 20 8463

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2026

| Im Recherchenbericht angeführtes Patentdokument | Datum der Veröffentlichung | Mitglied(er) der Patentfamilie | Datum der Veröffentlichung |
|---|---|---|---|
| US 10337909 B2 | 02-07-2019 | CN 107407591 A | 28-11-2017 |
| | | EP 3296706 A1 | 21-03-2018 |
| | | JP 6374827 B2 | 15-08-2018 |
| | | JP 2016212055 A | 15-12-2016 |
| | | US 2018052038 A1 | 22-02-2018 |
| | | WO 2016181697 A1 | 17-11-2016 |
| CN 103229027 A | 31-07-2013 | CN 103229027 A | 31-07-2013 |
| | | EP 2631614 A1 | 28-08-2013 |
| | | WO 2012053732 A1 | 26-04-2012 |

Für nähere Einzelheiten zu diesem Anhang : siehe Amtsblatt des Europäischen Patentamts, Nr.12/82

25